# EUROPEAN PATENT SPECIFICATION

(11) **EP 2 841 182 B1**
(45) Date of publication and mention of the grant of the patent: **30.05.2018**
(21) Application number: 12729864.4
(22) Date of filing: 11.06.2012
(51) Int. Cl.: B01D 53/02, A62B 23/00, B01D 46/00

(54) **FILTERING MATERIAL AND USE THEREOF**
FILTERMATERIAL UND VERWENDUNG DAVON
MATÉRIAU FILTRANT ET SON UTILISATION

(30) Priority: 25.04.2012 WO PCT/EP2012/001775
(43) Date of publication of application: 04.03.2015
(73) Proprietor: Blücher GmbH, 40699 Erkrath (DE)
(72) Inventor: BÖHRINGER, Bertram, 42115 Wuppertal (DE); GUERRA GONZÁLES, Omar, 45276 Essen (DE); ECKLE, Ilsebill, 45886 Gelsenkirchen (DE)
(74) Representative: Von Rohr Patentanwälte Partnerschaft mbB
(86) International application number: PCT/EP2012/002454
(87) International publication number: WO 2013/159797

(56) References cited:
- WO-A1-01/30491
- WO-A1-2007/055430
- WO-A1-2010/074909
- WO-A1-2010/090683
- US-A1- 2007 028 773
- US-A1- 2008 264 259

## Description

The present invention relates to the technical field of sorptive, especially adsorptive materials and particularly to the technical field of sorptive, especially adsorptive filtering materials and filters, which may especially be used for the purpose of the purification of fluids, such as streams of gases and air or for the purpose of the detoxification (i.e. the removal) of noxiants and toxic substances, in particular for use in or as respiratory filtering materials (e.g. NBC protective mask filters or gas-mask filters).

In particular, the present invention refers to an adsorptive filter unit for the purification of gases and/or gas mixtures, wherein the filter unit of the invention comprises a plurality of (i.e. at least two) filter elements being different from each other.

Furthermore, the present invention refers to a process for the purification of gases and/or gas mixtures, preferably air, and for the removal of chemical and/or biological substances or noxiants from gases and/or gas mixtures, respectively.

Moreover, the present invention relates to the use of the inventive adsorptive filter units for producing filters and filter materials of all types, in particular for the removal of pollutants, odorous substances and poisons.

Finally, the present invention relates to filters or filter materials as such, in particular for the removal of pollutants, odorous substances and poisons, the filters or filter materials being produced by using the adsorptive filter unit of the present invention and/or comprising the adsorptive filter unit of the present invention.

The adsorptive filter unit of the invention is useful not only for the military sector but also for the civil sector, more particularly for NBC (i.e. nuclear, biological and chemical) deployment, and/or for industrial applications, especially with respect to the purification of gases and/or gas mixtures, preferably air.

There exists a multitude of materials and substances, which are taken up or adsorbed by the skin and lead to serious physical harm. Examples include the vesicatory mustard gas (synonymously also referred to as yellow cross and Hd, respectively) and the nerve agent sarin.

A further class of substances being harmful to health is represented by the so-called TICs (*Toxic Industrial Chemicals*). Toxic industrial chemicals are industrial chemicals which cause chemical hazards, e.g. carcinogens, reproductive hazards, corrosives or agents that have a negative impact on lungs or blood, or physical hazards, e.g. flammable, combustible, explosive or reactive agents. In general, TICs are industrial chemicals that are manufactured, stored, transported and used throughout the world. Examples for TICs with high hazard index are ammonia, arsine, chlorine, ethylene oxide, formaldehyde, hydrogen sulfide, hydrocyanic acid and the like.

Therefore, people who are likely to come into contact with such poisons have to be protected against the hazardous effects of these poisons by suitable protective materials, especially regarding the purification of breathing air, e.g. by respiratory filtering materials, especially NBC protective mask filters.

Respiratory filtering materials and also industrial filters known for this purpose often include sorbents, especially in the form of activated carbon, for the purpose of adsorption and/or detoxification of the respective harmful substances as delineated above.

Owing to its quite unspecific adsorptive properties, activated carbon is the most widely used adsorbent. Activated carbon is generally obtained by carbonization (also known synonymously known as pyrolysis, burning etc.) and subsequent activation of carbon-containing starting compounds (e.g. organic resins etc.), with reference being given to starting compounds which lead to economically sensible yields, such as organic resins etc. (cf., for example, H. v. Kienle and E. Bäder, "Aktivkohle und ihre industrielle Anwendung" ["Activated Carbon and Its Industrial Applications"], Enke Verlag, Stuttgart, 1980).

In this context, activated carbon is often used in respective filter or filter materials, such as respiratory or NBC protective mask filters, especially in the form of a loose fill and/or a bulk, respectively. In this context, the sorbent is filled into a cartridge, which cartridge is e.g. adapted to a respiratory mask and allows for the passage of breathing air through the sorbent material.

Such respiratory or NBC protective mask filters are well known in the prior art. In this context, reference is made to EP 0 159 698 A2 and to the corresponding patent family members thereof, especially GB 2 157 970 A and JP 61011061 A, each referring to a filter canister for removing undesirable substances from a breathable gas, wherein the filter canister comprises a filter assembly including a sorbent on the basis of a bed of compressively loaded loose sorbent particles, wherein also carbon particles are used as the respective filter material.

However, the use of the aforenamed sorbents, such as e.g. activated carbon, especially in the form of a loose fill and/or a bulk, respectively, is generally linked to the decisive disadvantage that the respective filters exhibit a limited adsorption capacity and a limited adsorption capability, on the one hand, and a non-optimal behavior with respect to the flow of air through the filter as such, on the other hand.

Furthermore, usual sorbents such as activated carbon do not effectively adsorb all kinds of harmful substances or poisons (e.g. phosgen) in an efficient way.

As a consequence, as a serious drawback of prior art filters comprising a sorbent material, especially activated carbon, particularly in the form of a loose fill and/or a bulk, respectively, one has to conclude that the respective filters do not always exhibit the desired performance with respect to the adsorption capacities and breakthrough properties vis-à-vis the various substances to be adsorbed, especially resulting in decreased breakthrough times.

In order to reduce the respective disadvantages linked to prior art filters, an enlargement of the filter, especially on the basis of its volume or filtering distance, on the one hand, and an increase of the loading bulk density, especially by using smaller particles or more dense packagings, on the other hand, has been realized. These measurements lead to a certain improvement with respect to the adsorbing capacity as well as with respect to the breakthrough properties; however, the respective measurements for improving these breakthrough properties also lead to an increase in breathing resistance, which, however, represents a decisive drawback for the wearer of NBC protective masks comprising such filter elements. In particular, a significant increase in breathing resistance is not acceptable, especially not in situations of enlarged physical stress, which particularly occurs in combat situations or the like.

Moreover, in order to diminish the aforenamed disadvantages linked to the use of the adsorbent in the form of a loose fill or a bulk, respectively, the sorbent material, especially activated carbon, is often additized and/or provided with a catalytically active component, especially by impregnating the activated carbon for example with substances based on metals or metal compounds.

In general, such modified activated carbon exhibits a certain improvement with respect to the adsorption of specific harmful substances and agents, respectively, especially since the activated carbon modified with a catalytically active substance exhibits - in addition to its adsorption properties on the basis of physisorption - also chemisorptive properties due to the presence of the catalytically active substance and the impregnation, respectively.

WO 01/30491 A1 refers to a filter medium which comprises a first plurality of filter media particles having an extended surface area substrate comprising at least one transition metal impregnant and wherein the filter medium also comprises a second plurality of filter media particles which comprises an extended surface area substrate comprising an amine impregnant.

WO 2010/074909 A1 refers to a filter assembly which includes a filter bed comprising at least one chemical filtering medium and a pleated filter element, the latter including a particulate filtering medium and at least one chemical filtering medium. The filter bed may comprise granular sorbent material on the basis of activated carbon, alumina, zeolite, silica, catalysts and catalyst supports.

US 2007/028773 A1 refers to a method for purifying a gas stream comprising passing an impure gas stream for treatment through at least one adsorbent bed containing at least two adsorbent layers, wherein the adsorbent layers are selected from the group consisting of a desiccant, a zeolite or a zeolite in its ion-exchange form and an activated carbon.

WO 2007/055430 A1 refers to an air-purifying apparatus which comprises a first filter element for performing the function of deodorization, a second filter mounted below the first filter for performing the functions of deodorization and adsorbing of mold and a third filter mounted below the second filter for adsorbing germs, mold and virus.

WO 2010/090683 A1 refers to a porous metal organic framework (MOF) comprising coordinatively unsaturated metal sites or a reactive side group covalently bound to a linking moiety providing a group capable of undergoing reaction to form a covalent, hydrogen, ionic or other bond with an analyte.

Furthermore, US 2008/0264259 A1 refers to a filtration medium which comprises a fine filter layer comprising a plurality of nanofibers and a coarse filter layer comprising a plurality of microfibers, wherein the coarse filter layer is attached to the fine filter layer and wherein the fine filter layer may comprise a plurality of substrate nanoparticles.

Filtering materials comprising activated carbon impregnated with catalytically active metallic compounds are known in the art. In this context, EP 0 405 404 A1 and the corresponding patent family members US 5 063 196 A and JP 03114534 A, respectively, refer to an impregnated activated carbon for the adsorption of toxic gases and/or vapors, which activated carbon comprises an impregnation on the basis of copper and zinc and optionally also silver and/or triethylenediamine (TEDA). Furthermore, reference is made to EP 0 614 400 B1 and the corresponding patent family members WO 03/10896 A1 and US 5 492 882 A, referring to an activated carbon impregnated with several compounds wherein the several compounds comprise sulfuric acid or sulfuric acid salts, molybdenum compounds, copper compounds and zinc compounds.

However, in general, the impregnation of the activated carbon may have an adverse impact on the performance of the activated carbon since the catalyst may diminish the adsorption properties. Moreover, the problem of poisonous or warfare agents breaking through, especially at low and/or residual concentrations in the air to be purified, cannot always be solved by this principle.

Thus, the adsorption properties even of impregnated activated carbon are not always sufficient, especially since a certain breakthrough of low concentrations of chemical noxiants may occur, which, however, may have a detrimental effect to a person affected by the respective noxiants, especially since already very low concentrations of harmful substances generally exhibit a high impact on health.

In particular, the adsorption kinetics as well as the adsorption spontaneity even of impregnated activated carbon are not always sufficient, which especially applies for the removal of low and/or residual concentrations of noxiants in an air and/or gas stream to be purified, thus resulting in decreased breakthrough properties and reduced lifetimes of the respective filters as such.

Consequently, as delineated above, the respective prior art filtering materials comprising activated carbon having a specific impregnation do not always fulfill the high requirements linked to the purification of air or gas streams which are contaminated with low and/or residual concentrations of harmful substances and noxiants, respectively.

To sum up, there is a great need for an effective removal also of very small concentrations of a very wide variety of pollutants and/or noxiants from the air, especially harmful or noxious substances, toxic substances and the like.

The present invention therefore has, for its first object, to provide a filter unit, wherein the above-described disadvantages of the prior art are to be at least substantially obviated or to be ameliorated, respectively. More particularly, such an adsorptive filter unit should be suitable for the use in or as respiratory filters, NBC protective mask filters or gas-mask filters and the like.

In particular, another object of the present invention is to provide an adsorptive filter unit which exhibits improved adsorption properties, especially with regard to improved adsorption kinetics and/or adsorption spontaneity, especially accomplishing the task of adsorbing also low and/or residual concentrations of harmful substances and/or noxiants from air, thus improving the breakthrough behavior of the resulting filter.

Finally, another object of the present invention is to provide an adsorptive filter unit, which is in particular suitable for the use in or as respiratory filters or gas-mask filters for the removal of pollutants and poisons of all types, in particular from streams of air and/or gas and/or gas mixtures. In this context, the adsorptive filter unit shall ensure a good filtering efficiency when used in this way.

To achieve the abovementioned objects, the present invention proposes, according to a first aspect of the present invention, an adsorptive filter unit (i.e. a filter structure or filter media, respectively) according to Claim 1. Further advantages and embodiments of the adsorptive filter unit of the invention are the subject-matter of the respective dependent claims.

The present invention further provides, according to a further aspect of the present invention, a process for the purification of gases and/or gas mixtures, preferably air, and/or for the removal of chemical and/or biological substances or noxiants, according to the respective independent process claim.

The present invention, according to another aspect of the present invention, refers also to the use of the inventive adsorptive filter unit for producing filters and filter materials of all types, according to the respective independent use claim.

Finally, the present invention further provides, according to still another aspect of the present invention, filter or filter materials produced using an adsorptive filter unit of the invention and/or comprising the adsorptive filter unit of the invention, according to the respective independent claim.

It will be understood that features, embodiments, advantages and the like which are recited herein in relation to one aspect of the invention, of course, also apply correspondingly in relation to all other aspects of the invention.

Moreover, it is pointed out that the respective values and/or parameter indications can be determined in general on the basis of determination methods which are well-known to the skilled practitioner and/or which are explicitly indicated in the following.

Furthermore, it will be understood that a person skilled in the art may, for a particular application or on an one-off basis, depart from any hereinbelow recited numbers, values and ranges, without thereby leaving the scope of the present invention.

The present invention - in accordance with a **first** aspect of the present invention - accordingly provides an adsorptive filter unit (i.e. filter structure or filter media, respectively) (FU) for the purification of gases and/or gas mixtures, preferably air, and/or for the removal of chemical and/or biological substances or noxiants from gases and/or gas mixtures, preferably air, in particular for use in or as a respiratory filter or gas-mask filter,
wherein the filter unit (FU) comprises a plurality of, preferably at least two, filter elements (1, 2) which are different from each other,
- wherein the filter unit (FU) comprises at least a first filter element (1) comprising a first adsorbent material (3), wherein the first adsorbent material (3) is selected from granular, especially spherical, activated carbon particles, which activated carbon particles are provided, especially impregnated, with at least one reactive and/or catalytically active component based on a metal or a metal compound, wherein the reactive and/or catalytically active component of the first adsorbent material (3) is based on a combination of
   (i) copper,
   (ii) silver,
   (iii) zinc,
   (iv) molybdenum,
   (v) optionally triethylenediamine (TEDA);
- wherein the filter unit (FU) comprises at least a second filter element (2) arranged downstream of the first filter element (1) and/or arranged after the first filter element (1) with respect to the flow direction in the use-state of the filter unit (FU), wherein the second filter element (2) comprises a second adsorbent material (3') different from the first adsorbent material (3), wherein the second adsorbent material (3') is selected from metal-organic framework materials (MOFs), wherein the second adsorbent material (3') is present in granular form, and wherein the metal-organic framework material (MOF) of the second adsorbent material (3') comprises at least one metal selected from the group consisting of Zn, Cu, Ni, Pd, Pt, Ru, Fe, Mn, Ag, Al and Co;
- wherein the ratio of the height (h1) of the first filter element (1) to the height (h2) of the second filter element (2) [ratio h1 : h2], each based on the size in parallel to the direction of flow (R), is in the range of from 3 : 1 to 25 : 1.

The fundamental idea of the present invention thus has to be seen in providing an adsorptive filter unit on the basis of at least two different filter elements which are specifically arranged and/or positioned within the inventive filter unit with respect to the flow direction in the use-state of the filter unit as such. In this context, the respective filter elements differ from each other in so far as the first filter element especially comprises a very specific activated carbon impregnated with at least one reactive and/or catalytically active compound whereas the second filter element arranged downstream of the first filter element comprises a second adsorbent material selected from metal-organic framework materials (MOFs).

For, applicant has succeeded, in a completely surprising manner, in providing a very specific adsorptive filter unit which is provided with significantly improved adsorption properties, especially on the basis of an improved adsorption capacity, on the one hand, as well as on the basis of improved adsorption kinetics, especially adsorption spontaneity, with regard to poisonous and/or noxiant agents, on the other hand, allowing for the removal and/or detoxification even of very low concentrations of toxic substances over a prolonged period of time.

As a consequence, the inventive adsorptive filter unit exhibits improved overall breakthrough properties, thus making it highly appropriate for the use in or as filters, especially in gas-mask or respiratory filters for improved and long-time use. In this context, applicant has also succeeded in providing a filter unit which combines the diametrically opposed features of improved adsorption properties, on the one hand, and improved breathing resistance, on the other hand, within one and the same filter unit, especially since an undue enlargement of the filter volume as well as of the packaging density of the adsorbents to be used are not necessary with regard to the inventive concept.

Especially, the present invention provides for the first time a specific adsorptive filter unit on the basis of the purposeful combination and arrangement of specific filter elements, each having specific adsorption properties, wherein the inventive adsorptive filter unit as such is provided with a significantly increased adsorption efficiency.

In this context, without wishing to be bound to this specific theory, the presence of the first filter element especially on the basis of a specifically impregnated activated carbon and arranged upstream of the second filter element provides for outstanding adsorption and/or filtration properties with regard to a large spectrum of poisonous or noxiant agents and this also with regard to a large spectrum of TICs, whereas the second filter element which is purposefully arranged downstream of the first filter element and comprises a further specific adsorbent material on the basis of metal-organic framework materials (MOFs) exhibits purposefully optimized adsorption kinetics and adsorption spontaneity, respectively, especially with regard to more specific poisonous and/or noxiant agents being present in low and/or residual concentrations after the passage through the first filter element.

Consequently, according to the general concept of the present invention, the first filter element in general exhibits an improved adsorption capacity with respect to a wide spectrum of poisonous and/or noxiant agents, especially also TICs, whereas the second filter element is specifically optimized with respect to the adsorption of residual poisonous and/or noxiant agents, especially in very low and/or residual concentrations in the fluid, especially air, to be purified, wherein it is also possible to purposefully optimize the second filter element with respect to the adsorption of specific poisonous and/or noxiant agents and/or specific TICs.

In general, the second filter element exhibits a high capacity (especially also as a result of the small remaining amounts of toxic agents to be adsorbed) as well as a rapid filtration and/or adsorption kinetic also with respect to low and/or residual concentration of noxiants, especially TICs. Consequently, also low and/or residual concentrations of the substances to be adsorbed are effectively removed on behalf of the second filter element being purposefully arranged and/or positioned downstream of the first filter element, wherein the first and second filter elements complement each other to provide for the improved properties of the inventive filter element.

According to the inventive concept, in general, the first filter element of the inventive adsorptive filter unit exhibits an adsorption characteristic providing for a high adsorption capacity with a very slow increase of the breakthrough of the respective noxiants. Consequently, the second filter element of the inventive adsorptive filter unit is exposed only to relative low and/or residual concentrations of the respective noxiants to be adsorbed - which, however, may have an harmful impact on health - , the latter being effectively adsorbed by the second filter element due to the purposeful optimization of its adsorption properties with regard to the elimination of residual noxiants being present only in low concentrations in the fluid to be purified.

Thus, on the whole, a very effective adsorptive filter unit as such is provided on the basis of the inventive concept, having improved overall adsorption properties with a prolonged lifetime in the use state as a result of improved breakthrough characteristics due to excellent adsorption capacities and adsorption kinetics.

On the whole, due its specific properties, the use of the inventive adsorptive filter unit is not limited to the military sector, especially with regard to NBC protective mask filters or the like. Rather, the inventive adsorptive filter unit is also appropriate for industrial applications like industrial filters, especially filters for purification of the air in a room or the like as well as in the medical sector, especially due to its outstanding properties also with respect to the adsorption of TICs.

Furthermore, the purposefully optimized filter elements of the inventive filter unit as such surprisingly complement each other synergistically, especially also due to their specific arrangement within the inventive filter unit, with regard to the protective performance against poisonous and/or noxiant agents to be adsorbed from a stream of air or the like and thus beyond the sum total of the individual effects. As delineated hereinafter, the synergistic effect surprisingly found by the applicant is well proved by the operative examples given below.

The present invention thus succeeds altogether in significantly increasing the adsorption performance of the inventive adsorptive filter unit on the basis of two active filter elements and/or filter layers, respectively, with regard to poisonous and/or noxiant agents, such as warfare agents, resulting in an adsorptive filter unit which exhibits improved breakthrough properties and lifetimes, especially with regard to its use in or as gas-mask filters and the like.

Altogether, the conception of the inventive adsorptive filter unit is associated with a multiplicity of advantages, of which the aforementioned advantages are only mentioned by way of example.

The term "downstream" as used according to the claimed invention, especially refers to a relative arrangement and/or positioning of the second filter element with respect to the first filter element, wherein the arrangement of the second filter element is performed in so far as the second filter element is positioned in the use-state of the inventive filter unit after the first filter element with respect to the flow direction of the gas, gas mixture and/or air to be purified. Accordingly, the term "upstream" refers to an arrangement according to which a filter element, especially the fist filter element of the inventive adsorptive filter unit, is positioned in the use-state of the filter unit previous to and/or in front of the second filter element with respect to the flow direction of the gas, gas mixture and/or air to be purified.

As delineated above, due to the specific arrangement of the respective filter elements within the inventive adsorptive filter unit, according to which the second filter element is arranged downstream of the first filter element, a surprising improvement of adsorption properties has been achieved with respect to the inventive adsorptive filter unit, thereby also providing low breathing resistances.

With respect to the first filter element of the inventive adsorptive filter unit, especially the first adsorbent material, it is also pointed out that the purposeful provision, especially impregnation, of the activated carbon with at least one reactive and/or catalytically active component results in a catalytic activity of the activated carbon. Consequently, the first adsorbent material on the basis of activated carbon preferably exhibits chemisorptive properties in addition to the physisorptive properties of the adsorbent material as such. In general, the reactive and/or catalytically active component comprises a substance, which leads to the respective poisons and/or noxiants being rendered harmless. Thus, the catalytically active component may comprise a catalyst which induces the degradation of poisonous and/or noxiant agents impinging on the adsorptive filtering unit, wherein the catalyst as such may emerge at least essentially unchanged from the degradation reaction and wherein non-toxic degradation products result. On the basis of this principle, the adsorption capacity of the first filter element is increased, especially with respect to a wide spectrum of poisonous and/or noxiant agents and especially with respect to a wide spectrum of TICs. Especially due to the catalytic activity, the first filter element maintains its adsorption function with regard to poisonous and/or noxiant agents even when exposed to large concentrations of the agents to be adsorbent over a long period of time, wherein remaining low and/or residual concentrations of the poisonous and/or noxiant agents which are not adsorbed by the first filter element are then rendered harmless and/or removed due to adsorption by the second filter element arranged downstream of the first filter element.

According to an embodiment of the present invention, the first adsorbent material may comprise the reactive and/or catalytically active component in an amount in the range of from 0.0001 % by weight to 20 % by weight, especially in the range of from 0.001 % by weight to 15 % by weight, preferably in the range of from 0.01 % by weight to 10 % by weight, more preferably in the range of from 0.05 % by weight to 8 % by weight, yet more preferably in the range of from 0.1 % by weight to 6 % by weight, based on the first adsorbent material.

Moreover, the first adsorbent material may comprise copper in an amount in the range of from 0.0001 % by weight to 10 % by weight, especially in the range of from 0.001 % by weight to 8 % by weight, preferably in the range of from 0.01 % by weight to 6 % by weight, based on the first adsorbent material. Furthermore, the first adsorbent material may comprise silver in an amount in the range of from 0.001 % by weight to 1 % by weight, especially in the range of from 0.01 % by weight to 0.5 % by weight, preferably in the range of from 0.03 % by weight to 0.25 % by weight, based on the first adsorbent material. Moreover, the first adsorbent material may comprise zinc in an amount in the range of from 0.0001 % by weight to 10 % by weight, especially in the range of from 0.001 % by weight to 8 % by weight, preferably in the range of from 0.01 % by weight to 6 % by weight, based on the first adsorbent material.

In particular, the first adsorbent material may comprise molybdenum in an amount in the range of from 0.0001 % by weight to 6 % by weight, especially in the range of from 0.001 % by weight to 5 % by weight, preferably in the range of from 0.01 % by weight to 3 % by weight, based on the first adsorbent material. On the basis of the abovementioned weights of the respective components, particularly good results can be achieved with respect to the first filter element, especially with regard to its adsorption capacity, and thus also with respect to the adsorption properties of the inventive filter unit as such.

In general, with respect to the reactive and/or catalytically active component, it is also advantageous if the reactive and/or catalytically active component of the first adsorbent material is at least essentially chromium free.

Furthermore, according to another embodiment of the present invention, the reactive and/or catalytically active component of the first adsorbent material may further comprise at least on acidic component, especially selected from the group consisting of inorganic acids, organic acids and their salts and combinations, especially sulfuric acid, preferably sulfuric acid salts, in particular selected from the group consisting of copper sulfates, zinc sulfate and ammonium sulfates. In this context, the first adsorbent material may comprise the acidic component in an amount in the range of from 0.0001 % by weight to 5 % by weight, especially in the range of from 0.001 % by weight to 4 % by weight, preferably in the range of from 0.01 % by weight to 3.5 % by weight, based on the first adsorbent material.

The additional use of acidic components is especially effective with respect to alkaline agents to be adsorbed and/or removed, especially ammonia (NH₃).

Furthermore, according to the present invention, it is also possible that the reactive and/or catalytically active component of the first adsorbent material further comprises at least one alkaline and/or basic component, especially an organic amine, in particular triethylenediamine (TEDA). In this context, it is preferable when the first adsorbent material comprises the alkaline and/or basic component in an amount in the range of from 0.0001 % by weight to 5 % by weight, especially in the range of from 0.001 % by weight to 4 % by weight, preferably in the range of from 0.01 % by weight to 3.5 % by weight, based on the first adsorbent material.

The additional use of alkaline and/or basic components is preferred, especially with regard to the adsorption and/or removal of acidic agents, for example H₂S.

The first adsorbent material may represent an ASZM-TEDA activated carbon (copper, silver, zinc, molybdenum and triethylenediamine impregnated activated carbon). Furthermore, it is also possible according to the present invention that the first adsorbent material represents an ASZM-TEDA activated carbon (activated carbon impregnated with copper, silver, zinc and triethylenediamine).

On the whole, the protective properties of the adsorptive filter unit can be further improved when the reactive and/or catalytic equipment of the adsorbent material on the basis of the above metal compounds is present together with triethylenediamine (TEDA) and/or an organic acid and/or sulfuric acid and/or sulfuric acid salts.

Particularly good results in respect of the adsorption properties with regard to poisonous and/or warfare agents are also obtainable according to the present invention when the reactive and/or catalytically active component of the first adsorbent material is based on a combination of (i) copper(II) carbonate (CuCO₃); (ii) elemental silver; (iii) zinc(II) carbonate (ZnCO₃); (iv) ammonium dimolybdate; (v) triethylenediamine (TEDA).

In the aforementioned reactive and/or catalytically modification, the weight ratio of (i) copper / (ii) silver / (iii) zinc / (iv) molybdenum should be in the range of from 1 to 10 / 0.01 to 2 / 1 to 10 / 0.2 to 8, especially in the range of from 3 to 6 / 0.02 to 0.5 / 3 to 6 / 0.5 to 3, and preferably about 5 / 0.05 / 5 / 2.

Furthermore, according to a further embodiment preferred according to the present invention, the reactive and/or catalytically active component should contain (v) triethylenediamine (TEDA), wherein the amount ratio of (i) copper / (ii) silver / (iii) zinc / (iv) molybdenum / (v) triethylenediamine (TE-DA) should be in the range of from 1 to 10/ 0.01 to 2 / 1 to 10 / 0.2 to 8 / 0.3 to 9, especially in the range of from 3 to 6 / 0.02 to 0.5 / 3 to 6 / 0.5 to 3 / 1 to 4, and preferably about 5 / 0.05 / 5 / 2 / 3.

The first adsorbent material of the first filter element which is provided with at least one reactive and/or catalytically active component may also comprise so-called ABEK impregnations which have a catalytic and/or degrading effect with regard to specific toxic substances. In this connection, type A relates for example to certain organic gases and vapors having a boiling point ≥ 65 °C, for example cyclohexane. Type B relates to certain inorganic gases and vapors, for example hydrogencyanide. Type E relates to a degrading/protecting effect with regard to sulfur dioxide and other acidic gases and vapors. Type K finally relates to a protective function with regard to ammonia and organic ammonia derivatives. For further information, reference is made to the respective European standard EN 14387 : 2004.

As previously mentioned, it can be contemplated according to the present invention for ABEK type impregnations to be combined with a TEDA impregnation (ABEK-TEDA), in which case the adsorptive filter unit of the present invention also has an optimized protective function with regard to cyanogen chloride.
The addition of a TEDA impregnation also leads to a very good aging stability for the impregnation or the reactive and/or catalytically active component as such.

The provision and/or impregnation of the first adsorbent material can be performed by methods known to the skilled practitioner. In this context, the impregnation may be performed on the basis of solutions and/or dispersions of the respective catalytically active component which may be brought into contact with the activated carbon. The impregnation may be performed under heating and/or drying in order to obtain the respective impregnated activated carbon.

To obtain a high adsorption efficiency and capacity and a good breakthrough behavior of the filter unit of the invention at the same time, it is advantageous that the first adsorbent material has a mean particle diameter in the range of from 0.01 to 2.0 mm, in particular in the range of from 0.05 to 1.0 mm, preferably in the range of from 0.1 to 1.0 mm.

In general, the first adsorbent material is particularly mechanically stable and/or has a bursting pressure of at least 0,5 Newtons, especially at least 1 Newtons, preferably at least 2 Newtons, especially a bursting pressure in the range of from 0,5 Newtons to 20 Newtons, especially in the range of from 0,5 Newtons to 10 Newtons, per active carbon particle or active carbon bead.

Furthermore, the first adsorbent material should have an apparent (bulk) density in the range of from 500 g/l to 1,000 g/l, especially in the range of from 550 g/l to 900 g/l, preferably in the range of from 600 g/l to 800 g/l.

In general, the first adsorbent material should have a total porosity in the range of from 40 % to 70 %, especially in the range of from 45 % to 65 %, preferably in the range of from 50 % to 60 %, based on the first adsorbent material.

Furthermore, the first adsorbent material should have a moisture content in the range of from 0,01 % by weight to 10 % by weight, especially in the range of from 0,1 % by weight to 5 % by weight, preferably in the range of from 0,5 % by weight to 3 % by weight, based on the first adsorbent material. In this context, the moisture content has in general an influence on the adsorption properties of the activated carbon especially with regard to its reactive and/or catalytic properties. In this context, the applicant has surprisingly found out that the aforedescribed ranges specifically result in a further improvement of the adsorption properties of the first adsorbent material.

Additionally, the first adsorbent material may have a specific total pore volume in the range of 0.1 cm³/g to 2.5 cm³/g, especially in the range of from 0.2 cm³/g to 2.0 cm³/g, preferably in the range of from 0.3 cm³/g to 1.5 cm³/g, more preferably in the range of from 0.4 cm³/g to 1.0 cm³/g.

Moreover, the first adsorbent material should have a specific surface area (BET surface area) of at least 500 m²/g, especially at least 750 m²/g, preferably at least 1,000 m²/g, more preferably at least 1,200 m²/g. In this context, the first adsorbent material should have a specific surface area (BET surface area) in the range of from 500 m²/g to 2,500 m²/g, especially in the range of from 750 m²/g to 2,250 m²/g, preferably in the range of from 900 m²/g to 2,000 m²/g, more preferably in the range of from 1,000 m²/g to 1,750 m²/g.

The aforementioned BET values relate to pores having pore diameters up to 400 Å inclusive. For the BET method, reference can be made, for example, to Römpp Chemielexikon [Römpp's Chemical Encyclopaedia], 10th Edition, Georg Thieme Verlag, Stuttgart/New York, keyword: "BET method", and the literature reviewed there, Winnacker-Küchler (3rd Edition), Volume 7, pages 93 ff. and Z. Anal. Chem. 238, pages 187 to 193 (1968).

Furthermore, the first adsorbent material should have an adsorption volume V_{ads} of at least 250 cm³/g, especially at least 300 cm³/g, preferably at least 350 cm³/g, more preferably at least 400 cm³/g. In this context, the first adsorbent material should have an adsorption volume V_{ads} in the range of from 250 cm³/g to 1,000 cm³/g, especially in the range of from 300 cm³/g to 900 cm³/g, preferably in the range of from 350 cm³/g to 750 cm³/g.

The aforementioned values relate to a measurement of the adsorption volume at a partial pressure p/p₀ of 0.995 on pores having pore diameters in the range up to 400 Å inclusive.

In general, the total pore volume according to *Gurvich* of the first adsorbent material used according to the invention is also sufficiently high: In this context, the first adsorbent material should have a total pore volume according to Gurvich of at least 0.50 cm³/g, especially at least 0.55 cm³/g, preferably at least 0.60 cm³/g, more preferably at least 0.65 cm³/g, yet more preferably at least 0.70 cm³/g. In this context, the first adsorbent material has a total pore volume according to Gurvich in the range of from 0.50 cm³/g to 0.90 cm³/g, especially in the range of from 0.55 cm³/g to 0.85 cm³/g, preferably in the range of from 0.60 cm³/g to 0.80 cm³/g, more preferably in the range of from 0.65 cm³/g to 0.80 cm³/g, yet more preferably in the range of from 0.70 cm³/g to 0.75 cm³/g.

The aforementioned values relate to the determination at a partial pressure p/p₀ of 0.995 on pores having a pore diameter up to 400 Å inclusive. For further details with respect to the determination of the total pore volume according to Gurvich, reference can be made to L. Gurvich (1915), J. Phys. Chem. Soc. Russ. 47, 805, and to S. Lowell et al., Characterization of Porous Solids and Powders: Surface Area Pore Size and Density, Kluwer Academic Publishers, Article Technology Series, pages 111 ff.

In general, all physicochemical data of the active carbon indicated equally relate to measurements on pores having pore diameters in the range of from > 0 Å up to 400 Å.

According to the claimed invention, a large variety of activated carbon may be used. Especially, the first adsorbent material in the form of activated carbon may be obtainable by carbonization and subsequent activation of styrene/divinylbenzene copolymers, in particular divinylbenzene-crosslinked polystyrenes, preferably in granular form, particularly preferably in spherical form. In this context, the divinylbenzene content of the styrene/divinylbenzene copolymers should be in the range of from 1 % by weight to 15 % by weight, preferably in the range of from 2 % by weight to 10 % by weight, based on the styrene/divinylbenzene copolymers.

For example, an active carbon of this type of an active carbon prepared starting from phenolic resin beads (cf. for example, EP 1 440 692 B1) is superior in its action.

Active carbon employable according to the invention, which fulfills the aforementioned requirements and/or specifications containing the aforementioned physicochemical requirements is marketed, for example, by Blücher GmbH, Erkrath, Germany, and also Adsor-Tech GmbH, Premnitz, Germany.

On the whole, the first filter element of the inventive adsorptive filter unit in general exhibits a high capacity with respect to a broad variety and/or spectrum of poisonous or noxiant substances due to the use of a very specific adsorbent material as defined above.

Furthermore, also the second adsorbent material of the second filter element plays a fundamental role with respect to the purposeful optimization of the overall adsorption properties of the inventive adsorptive filter unit.

In this context, it is advantageous according to the claimed invention if the second adsorbent material is present in granular form, preferably in spherical form. In this context, the average particle diameter of the second adsorbent material shall be in the range of from 0.01 µm to 5 mm, especially in the range of from 0.1 µm to 3 mm, preferably in the range of from 0.2 µm to 2.5 mm, more preferably in the range of from 0.5 µm to 2 mm, yet more preferably in the range of from 1 µm to 1.5 mm.

Furthermore, particularly good results are achieved with respect to the surprisingly found improvement of the adsorption properties especially with regard to the adsorption of low and/or residual concentration of toxic substances, if the second adsorbent material comprises and preferably consists of at least one metal-organic framework material. In this context, the second adsorbent material shall comprise the at least one metal-organic framework (MOF) in bulk and/or as such.

For the purpose of the present invention, the second adsorbent material may thus be used in the form of *"metal-organic frameworks (MOFs)",* also referred to synonymously as *"MOF substances", "MOF materials", "porous coordination polymers"* or the like, which are generally porous and have a crystalline structure. These metal-organic frameworks have relatively simple modular structures and form a specific class of porous materials. MOFs generally comprise a mononuclear complex as crosslinking point (*"node"*) to which a plurality of polyfunctional or polydentate ligands are bound. The term "*metal-organic framework (MOF)"* was coined by *Omar Yaghi,* one of the pioneers in the field of metal-organic frameworks. Various compounds have been named by *Yaghi* simply on the basis of the order in time in which they were discovered (e.g. MOF-2 originates from the year 1998 and MOF-177 originates from the year 2004).

For the purpose of the present invention, the term "*metal-organic framework*" refers, in particular to the inorganic-organic hybrid polymer obtained after its preparation, in particular after being freed of impurities, which is made firstly of repeating structural units based on metal ions, and secondly, bridging, in particular at least bidentate ligands. The metal-organic frameworks are thus made of metal ions which are joined to another via at least bidentate organic ligands so as to form a three-dimensional structure which has internal voids (pores), with the pores being defined or determined by, in particular, the metal atoms and the organic ligands joining them. An MOF material can have exclusively the same metal ions (e.g. copper or zinc, etc.) or else two or more different metal ions (i.e. metal ions of a different type, e.g. copper and zinc, etc.).

Further details regarding metal-organic frameworks (MOFs) may be found, for example, in the review article by S. Kaskel, "Forum per Baukasten" in: Nachrichten aus der Chemie, 53, April 2005, pages 394 to 399*,* and also the references cited therein.

The preparation of metal-organic frameworks as used is likewise adequately known to the skilled practitioner so that no further details are necessary in this respect. In this context, reference may be made to the reference cited above and in addition to the relevant patent literature, by way of example: WO 2007/023295 A2, US 2004/0097724 A1, WO 2005/04948 A1, WO 2005/068474 A1 and to WO 2005/049892.

Metal-organic frameworks are thus porous, generally crystalline materials, in particular materials having a well-ordered crystalline structure comprising metal-organic complexes having transition metals (e.g. copper, zinc, nickel, cobalt, etc.) as nodes and organic molecules (ligands) as connections or linkers between the nodes.

Furthermore, according to the claimed invention, it is also possible that the second adsorbent material comprises a mixture of metal-organic framework material (MOF) and a preferably organic binder. Especially, the second adsorbent material may comprise the at least one metal-organic framework material (MOF) in a form incorporated in an organic binder.

With respect to the optional use of an organic binder, another preferred embodiment according to the claimed invention can be seen in the measurement according to which the second adsorbent material comprises the metal-organic framework material (MOF) and the preferably organic binder in a MOF/binder ratio of > 1 and in particular in the range of from 1 : 1 to 10 : 1, especially in the range of from 1.1 : 1 to 5 : 1, preferably in the range of from 1.2 : 1 to 3 : 1, more preferably in the range of from 1.4 : 1 to 2.5 : 1. Furthermore, the organic binder shall be an organic binder and may be more especially selected from the group consisting of polyesters, polystyrenes, poly(meth)acrylates, polyacrylates, celluloses, polyamides, polyolefins, polyalkylene oxides and mixtures thereof.

In general, the mixture of metal-organic framework (MOF) and organic binder shall be present in a form which can be processed to give shaped bodies, in particular in the form of spheres, grains, pellets, granules, rods or the like. In this context, the shaping may be carried out by shaping processes customary for these purposes, in particular compounding, extrusion, melt pressing or the like. The respective methods as such are well known to the skilled practitioner.

According to the claimed invention, it is also possible to provide the second adsorbent material and/or the second filter element as such via spunbonding methods, especially electrospunbonding methods, which especially applies to the provision of the second adsorbent material in the form of MOFs. The adsorbent material as such can then be present in filamentary form. The respective methods are known to the skilled practitioner. In particular, due to the applied methods on the basis of spunbonding, it is also possible to provide the second filter element in the form of very thin layers comprising a high density of the adsorbent material as such.

According to the present invention, the applicant has for the first time and surprisingly discovered that metal-organic frameworks (MOFs) are highly suitable with respect to the use in a very specific adsorptive filter unit within a filter element thereof arranged downstream to another filter element of the inventive adsorptive filter material, thereby effectively adsorbing low and/or residual concentrations of respective toxic substances to be adsorbed.

In this context, it is also possible to provide a high specificy of the second adsorbent material with regard to specific toxic substances and/or TICs. In this context, it is possible that the metal-organic frameworks are set within a wide range via the type and/or number of the at least bidentate organic ligands and/or the type and/or oxidation state of the metal ions. Accordingly, it is possible for the metal-organic framework to have very specific adsorption properties which may be tailored with regard to the specific application of the inventive filter unit. Especially, both the pore sizes and the pore sizes distribution of these porous materials in the form of MOFs can be set in a targeted manner during the synthesis, especially via the type and/or the number of ligands and/or via the type and/or oxidation state of the metals used. As indicated above, the metal-organic framework material (MOF) used according to the claimed invention for the second adsorbent material shall comprise repeating structural units based in each case on at least one metal, in particular metal atom or metal ion, and at least one at least bidentate and/or bridging organic ligand.

In particular, preference is given for the purpose of the present invention to the metal-organic frameworks material (MOF) of the second adsorbent material to comprise at least one metal, in particular metal atom or metal ion, selected from the group consisting of Zn, Cu, Ni, Pd, Pt, Ru, Fe, Mn, Ag, Al and Co, more preferably selected from the group consisting of Cu, Fe, Co, Zn, Mn, Al and Ag, yet more preferably selected from the group consisting of Cu, Fe, Al and Zn.

Furthermore, the metal-organic framework of the second adsorbent material may comprise at least one at least bidentate and/or bridging organic ligand which has at least one functional group which is capable of forming at least two coordinate bonds to a metal, in particular metal atom or metal ion, and/or forming a coordinate bond to each of two more metals, especially metal atoms or metal ions, identical or different, where, in particular, the functional group of the ligand has at least one heteroatom, preferably from the group consisting of N, O, S, B, P, Si and Al, more preferably N, O and S.

In this context, the ligand should be selected from among at least divalent organic acids, in particular dicarboxylic acids, tricarboxylic acids, tetracarboxylic acids and mixtures thereof, particularly preferably unsubstituted or at last monosubstituted aromatic dicarboxylic, tricarboxylic or tetracarboxylic acids having, in particular, one, two, three, four or more rings, where, in particular, each of the rings can contain at least one heteroatom, identical or different, in particular N, O, S, B, P, Si and/or Al, preferably N, S and/or O.

Moreover, the metal-organic framework may be selected from the group consisting of Cu₃(BTC)₂, Zn₂(BTC)₂(DABCO), Al(NDC) and combinations thereof, especially Cu₃(BTC)₂.

The metal-organic framework (MOF) is usually present in crystalline form. In particular, the degree of crystallinity is at least 60 %, in particular at least 70 %, preferably at least 80 %, particularly preferably at least 90 %, particularly preferably at least 95 %, very particularly preferably at least 99 % or more, based on the MOF as such. As a result of the crystallinity, particularly good hardnesses, abrasion resistances and/or rupture strength of the sorbent can be obtained.

Particularly advantageous properties of the adsorptive filter unit can be achieved when the metal-organic framework material (MOF) of the second adsorbent material is present in activated form, preferably by means of heat treatment. Such activation generally leads to a not inconsiderable increase in the internal surface area (BET) and the total pore volume of the sorbent of the metal-organic framework (MOF). Activation can advantageously achieved by subjecting the second adsorbent material to a heat treatment, in particular after it has been prepared or before it is used in the adsorptive filter unit according to the invention. The thermal treatment to effect activation is carried out below the decomposition temperature, in particular at temperatures in the range of from 90 °C to 300 °C, preferably in the range of from 100 °C to 250 °C, more preferably in the range of from 110 °C to 220 °C, preferably over a period from 0.1 to 48 hours, in particular from 1 to 30 hours, preferably from 5 to 24 hours. The heat treatment can be carried out either under an at least substantially unreactive, preferably at least substantially inert, atmosphere or else in an oxidizing atmosphere, for example in the presence of oxygen (e.g. under the ambient atmosphere). Without wishing to be tied to a particular theory, the positive effect of the activating treatment can be explained by existing pores being freed or purified of any impurities and/or additional pores, cracks, crevices or the like being generated on the surface of the MOFs during the activation, so that the porosity of the MOFs and thus the total pore volume and the internal surface area increase. The metal-organic framework material (MOF) of the second adsorbent material has internal voids, in particular pores, and/or wherein the metal-organic framework (MOF) is porous. This results in relatively high internal surface areas and total pore volume.

In this context, the metal-organic framework material (MOF) of the second adsorber material may have a total pore volume determined by the *Gurvich* method of at least 0.1 cm³/g, in particular at least 0.2 cm³/g, preferably at least 0.3 cm³/g. In this context, the metal-organic framework (MOF) should have a total pore volume determined by the Gurvich method of up to 2.0 cm³/g, in particular up to 3.0 cm³/g, preferably up to 4.0 cm³/g, particularly preferably up to 5.0 cm³/g.

Furthermore, the metal-organic framework material (MOF) of the second adsorbent material should further have a total pore volume determined by the Gurvich method in the range of from 0.1 cm³/g to 5.0 cm³/g, in particular in the range of from 0.2 cm³/g to 4.5 cm³/g, preferably in the range of from 0.3 cm³/g to 4.0 cm³/g.

Moreover, it is also advantageous according to the inventive concept, if the metal-organic framework material (MOF) of the second adsorbent material has a BET surface area of at least 100 m²/g, in particular at least 150 m²/g, preferably at least 200 m²/g, particularly preferably at least 250 m²/g, very particularly preferably at least 500 m²/g, even more preferably at least 1,000 m²/g. In this context, the metal-organic framework material (MOF) of the second adsorbent material should have a BET surface area of up to 4,000 m²/g, in particular up to 4,250 m²/g, preferably up to 4,500 m²/g, particularly preferably up to 4,750 m²/g, very particularly preferably up to 5,000 m²/g and more.

In particular, the metal-organic framework material (MOF) of the second adsorbent material has a BET surface area in the range of from 100 m²/g to 5,000 m²/g, in particular in the range of from 150 m²/g to 4,750 m²/g, preferably in the range of from 200 m²/g to 4,500 m²/g, particularly preferably in the range of from 250 m²/g to 4,250 m²/g, very particularly preferably in the range of from 500 m²/g to 4,000 m²/g.

Furthermore, the metal-organic framework material (MOF) of the second adsorbent material should have a bulk density in the range of from 50 g/l to 1,000 g/l, in particular in the range of from 100 g/l to 900 g/l, preferably in the range of from 150 g/l to 800 g/l.

As already delineated above, the use of very specific adsorption materials also with respect to the second adsorbent material of the second filter element results in the provision of very specific adsorption properties of the filter unit as such, especially with regard to specific noxiants, wherein due to the excellent adsorption kinetics also low and/or residual concentrations of the respective substances are effectively adsorbed by the inventive filter medium due to the purposeful interaction of the first and second filter element.

With respect to the adsorptive filter unit as such, it is preferred according to an advantageous embodiment of the claimed invention that the first filter element comprises the first adsorbent material in an amount in the range of from 20 % by weight to 100 % by weight, especially in the range of from 30 % by weight to 95 % by weight, preferably in the range of from 40 % by weight to 90 % by weight, more preferably in the range of from 50 % by weight to 85 % by weight, yet more preferably in the range of from 60 % by weight to 80 % by weight, based on the first filter element, wherein the first adsorbent material of the first filter element is fixed in and/or on at least one carrier structure.

Furthermore, the second filter element shall comprise the second adsorbent material in an amount in the range of from 15 % by weight to 100 % by weight, especially in the range of from 25 % by weight to 95 % by weight, preferably in the range of from 30 % by weight to 80 % by weight, more preferably in the range of from 35 % by weight to 75 % by weight, yet more preferably in the range of from 40 % by weight to 70 % by weight, based on the second filter element, wherein the second adsorbent material of the second filter element is fixed in and/or on at least one carrier structure.

Furthermore, in particular, the first filter element comprises the first adsorbent material in the form of a loose fill and/or in bulk form and/or in loose form. In this context, also the second filter element may comprise the second adsorbent material in the form of a loose fill and/or in bulk form and/or in loose form.

Especially, the first filter element my comprise the first adsorbent material in the form of a loose fill and/or in bulk form and/or in loose form and/or the second adsorbent material of the second filter element may be fixed in and/or on at least one carrier structure.

According to a further alternative embodiment of the claimed invention, it is also possible that the first adsorbent material of the first filter element is fixed in and/or on at least one carrier structure. This also applies for the second adsorbent material, i.e. it is also possible according to the inventive concept that the second adsorbent material of the second filter element is fixed in and/or on at least one carrier structure.

In this context, the carrier structure of the first filter element and/or the carrier structure of the second filter element, independently from each other, are gas-permeable, in particular air-permeable, and in particular should have a gas permeability, in particular air permeability, of at least 10 l·m⁻²·s⁻¹, in particular at least 30 l·m⁻²·s⁻¹, preferably at least 50 l·m⁻²·s⁻¹, more preferably at least 100 l·m⁻²·s⁻¹, yet particularly preferably at least 500 l·m⁻²·s⁻¹, and/or up to 10,000 l·m⁻²·s⁻¹, in particular up to 20,000 l·m⁻²·s⁻¹, at a flow resistance of 127 Pa.

Furthermore, according to a preferred embodiment of the present invention, the carrier structure of the first filter element and/or the carrier structure of the second filter element, independently from each other, have a three-dimensional structure and are especially configured as a preferably open-pored foam, especially a polyurethane foam, especially wherein the mean cell diameter of each carrier structure should be, independently from each other, at least twice as great as the mean particle diameter of the respective adsorbent material.

In particular, the carrier structure of the first filter element and/or the carrier structure of the second filter element, independently from each other, have a two-dimensional and/or sheet-like structure and are especially configured as a sheet-like, preferably textile, structure.

Furthermore, according to an embodiment of the claimed invention, the carrier structure of the first filter element and/or the carrier structure of the second filter element, independently from each other, should be configured as a sheet-like textile structure, preferably an air-permeable textile material, preferably a woven fabric, drawn-loop knit, formed-loop knit, lay-up or textile composite, in particular nonwoven. In this context, the carrier structure of the first filter element and/or the carrier structure of the second filter element, independently from each other, should have a weight per unit area in the range of from 5 g/m² to 1,000 g/m², especially 10 g/m² to 500 g/m², preferably 15 g/m² to 450 g/m².

In this context, the carrier structure of the first filter element and/or the carrier structure of the second filter element, independently from each other, should be sheet-like textile structures containing natural fibers and/or synthetic fibers (chemical fibers) or consisting thereof, in particular wherein the natural fibers are selected from the group consisting of wool fibers and cotton fibers (CO) and/or in particular wherein the synthetic fibers are selected from the group consisting of polyesters (PES); polyolefins, in particular polyethylene (PE) and/or polypropylene (PP); polyvinyl chlorides (CLF); polyvinylidene chlorides (CLF); acetates (CA); triacetates (CTA); polyacrylonitrile (PAN); polyamides (PA), in particular aromatic, preferably flame-resistant polyamides; polyvinyl alcohols (PVAL); polyurethanes; polyvinyl esters; (meth)acrylates; polylactic acids (PLA); activated carbon; and mixtures thereof.

Moreover, the first adsorbent material and/or the second adsorbent material, independently from each other, may be fixed to the respective support material of the first filter element and/or the second filter element, preferably by means of adhesive bonding, in particular by means of an adhesive or as a result of intrinsic stickiness or self-adhesion.

Also the respective dimensions and/or volumes of the filter elements play an important role with respect to the overall adsorptive and/or filtering properties of the inventive adsorptive filter unit as such. In this context, in particular, the first filter element has a height (h1), based on the size in parallel to the direction of flow (R) in particular of the fluid to be purified, in the range of from 1 mm to 100 mm, especially in the range of from 2 mm to 75 mm, preferably in the range of from 3 mm to 50 mm, more preferably in the range of from 4 mm to 40 mm, yet more preferably in the range of from 5 mm to 30 mm. In this context, the first filter element should have a weight per unit area in the range of from 10 g/m² to 1,500 g/m², especially in the range of from 20 g/m² to 500 g/m², preferably in the range of from 30 g/m² to 400 g/m², more preferably in the range of from 40 g/m² to 300 g/m².

Furthermore, the second filter element of the adsorptive filter unit according to the claimed invention should have a height (h2), based on the size in parallel to the direction of flow (R) in particular of the fluid to be purified, in the use state of the adsorptive filter unit, in the range of from 0,05 mm to 50 mm, especially in the range of from 0,1 mm to 30 mm, preferably in the range of from 0,15 mm to 10 mm, more preferably in the range of from 0,2 mm to 5 mm, yet more preferably in the range of from 0,4 mm to 4 mm, even more preferably in the range of from 0,5 mm to 3 mm. Especially, the second filter element should have weight per unit area in the range of from 5 g/m² to 1,000 g/m², especially in the range of from 5 g/m² to 400 g/m², preferably in the range of from 10 g/m² to 300 g/m², more preferably in the range of from 15 g/m² to 200 g/m².

Moreover, the ratio of the height (h1) of the first filter element to the height (h2) of the second filter element [ratio h1 : h2], each based on the size in parallel to the direction of flow (R), should be in the range of from 3 : 1 to 15 : 1, preferably in the range of from 3 : 1 to 12 : 1, more preferably in the range of from 3 : 1 to 10 : 1.

Preferably, the filter elements may be stapled on each other and/or within the inventive filter unit. In this context, the respective filter elements may be affixed to each other preferably using a discontinuously applied adhesive. It is furthermore also within the scope of the present invention that the filter unit may consist of the first filter element and the second filter element.

As delineated above, the second filter element is to comprise a second adsorbent material which is different from the first adsorbent material comprised by the first filter element. This means that the first adsorbent material comprised by the first filter element, on the one hand, and the second adsorbent material comprised by the second filter element, on the other hand, have to be selected with the proviso that they differ from each other, especially that they differ by at least one property and/or parameter.

Further advantages, properties, aspects and features of the present invention will become apparent from the following description of an operative example depicted in the respective figures:
- Fig. 1: represents a schematic representation of an adsorptive filter unit according to the invention; and
- Fig. 2: depicts breakthrough diagrams of comparative filter units each on the basis of a single filter element only (Fig. 2A and Fig. 2B) in comparison to the breakthrough properties of an inventive adsorptive filter unit having a first filter element and a second filter element as defined according to the present invention (Fig. 1C).

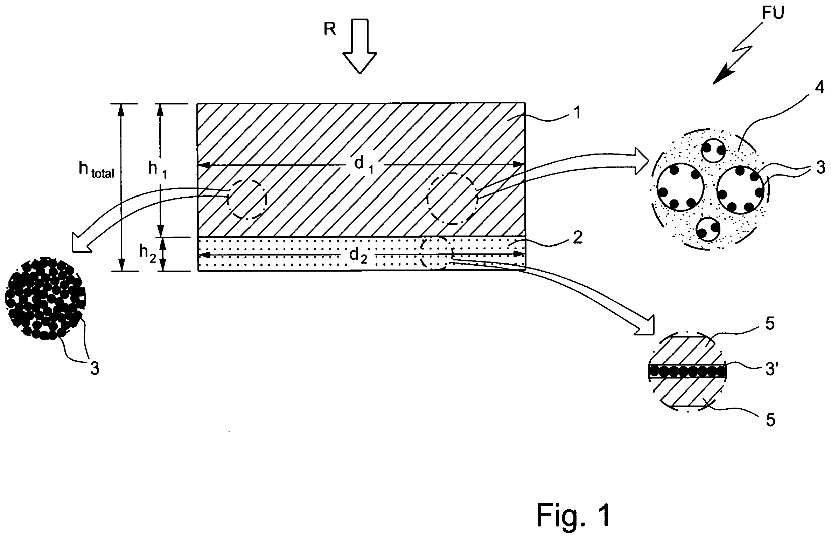

Fig. 1 illustrates an adsorptive filter unit (i.e. filter structure or filter media, respectively) (FU) for the purification of gases and/or gas mixtures, preferably air, and/or for the removal of chemical and/or biological substances or noxiants from gases and/or gas mixtures, preferably air, in particular for use in or as a respiratory filter or gas-mask filter, wherein the filter unit (FU) comprises a plurality of, preferably at least two, filter elements (1, 2) which are different from each other, wherein the filter unit (FU) comprises at least a first filter element (1) comprising a first adsorbent material (3) selected from granular, preferably spherical, activated carbon particles, which first adsorbent material (3) is provided, especially impregnated, with at least one reactive and/or catalytically active component based on a metal or a metal compound, wherein the reactive and/or catalytically active component of the first adsorbent material (3) is based on a combination of (i) copper, (ii) silver, (iii) zinc, (iv) molybdenum, (v) optionally triethylenediamine (TEDA); wherein the filter unit (FU) comprises at least a second filter element (2) arranged downstream of the first filter element (1) and/or arranged after the first filter element (1) with respect to the flow direction in the use-state of the filter unit (FU), wherein the second filter element (2) comprises a second adsorbent material (3') different from the first adsorbent material (3), wherein the second adsorbent material (3') is selected from metal-organic framework materials (MOFs), wherein the second adsorbent material (3') is present in granular form, and wherein the metal-organic framework material (MOF) of the second adsorbent material (3') comprises at least one metal selected from the group consisting of Zn, Cu, Ni, Pd, Pt, Ru, Fe, Mn, Ag, Al and Co; wherein the ratio of the height (h1) of the first filter element (1) to the height (h2) of the second filter element (2) [ratio h1 : h2], each based on the size in parallel to the direction of flow (R), is in the range of from 3 : 1 to 25 : 1.

Fig. 1 further shows that the first filter element as well as the second filter element may comprise respective carrier structures (4, 5) for the first adsorbent material (3) and the second adsorbent material (3'), respectively.

Fig. 1 also points to the arrangement of the filter elements, wherein the second filter element is arranged downstream of the first filter element with respect to the direction of flow (R) of the fluid to be purified.

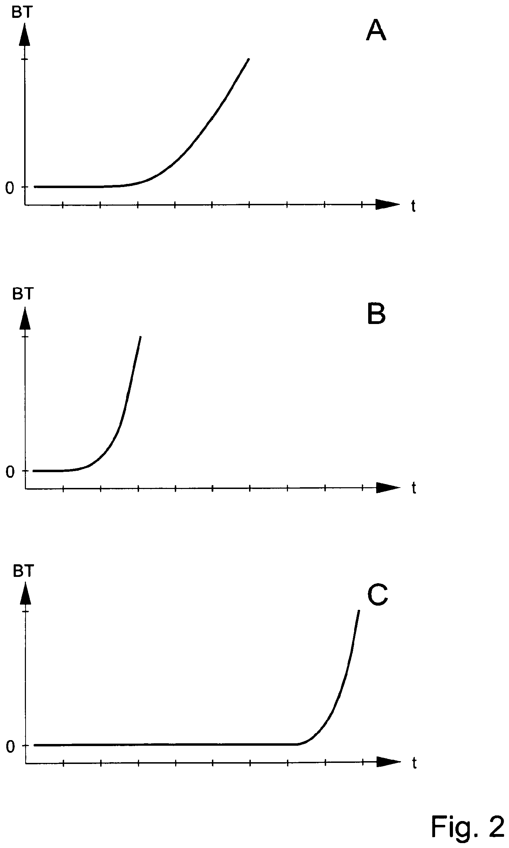

Furthermore, Fig. 2 shows the breakthrough performance of the inventive filter unit on the basis of two filter elements, the latter being different from each other (Fig. 2C) in comparison with two single filter elements on the basis of activated carbon comprising an ASZM-TEDA impregnation (Fig. 2A) and of a specific MOF (Fig. 2B). With regard to the inventive filter unit, a significant improvement of the breakthrough properties is found, with the overall effect being beyond the sum of the individual effects, pointing to synergy.

The present invention further provides - in accordance with a **second** aspect of the present invention - a process for the purification of gases and/or gas mixtures, preferably air, and/or for the removal of chemical and/or biological substances or noxiants from gases and/or gas mixtures, preferably air, wherein the process comprises a process step of contacting a gas and/or gas mixture, preferably air, to be purified and/or to be cleaned from chemical and/or biological substances or noxiants with an adsorptive filter unit as defined above.

The inventive process can thus be performed by bringing the inventive adsorptive filter unit in contact with the gas, gas mixture and/or air to be purified, wherein the respective fluid is passed through the inventive adsorptive filter unit, e.g. due to the application of a pressure difference over the inventive filter unit. In this context, the inventive process may be performed under specific relative humidities especially of the fluid, in particular gas, gas mixture and/or air, to be purified. In this context, the respective fluid to be purified should exhibit a relative humidity at room temperature (T = 20 °C) in the range of from 5 % RH to 100 % RH, especially in the range of from 10 % RH to 90 % RH, preferably in the range of from 30 RH to 85 % RH, more preferably in the range of from 40 % RH to 80 % RH, yet more preferably in the range of from 50 % RH to 80 % RH. Especially, very good results regarding the overall adsorption properties are achieved when the relative humidity of the fluid to be purified is relatively high, e.g. in the range of from 60 % RH to 80 % RH.
The present invention further provides - in accordance with a **third** aspect of the present invention - the use of an adsorptive filter unit as described according to the first aspect of the present invention for producing filters and filter materials of all types, in particular for the removal of pollutants, odorous substances and poisons of all types, in particular from streams of air and/or gas, for example NBC protective mask filters, odor filters, sheet-like filters, air filters, in particular filters for purification of air in a room, adsorptive support structures and filters for the medical sector.

Finally, the present invention also provides - in accordance with a **fourth** aspect of the present invention - a filter or filter material, in particular for the removal of pollutants, odorous substances and poisons of all types, in particular from streams of air and/or gas, in the form of NBC protective mask filters, odor filters, sheet-like filters, air filters, in particular filters for purification of air in a room, adsorptive support structures and filters for the medical sector, comprising an adsorptive filter unit as described with the first aspect of the present invention. Further embodiments, modifications and variations of the present invention can readily be recognized and implemented by the skilled practitioner on reading the description, without exceeding the scope of the present claims. The present invention is illustrated in the following with reference to operative examples, which, however, shall not restrict the present invention in any way.

### EXAMPLES:

### 1. Comparative adsorptive filter units on the basis of single filter elements:

Different adsorptive filter units which each consists of a single filter element are produced (comparative filter units 1a and 1b as well as 2a to 2d):
In a first series, with respect to comparative filters units 1a and 1b, the filter units as such exhibit only one filter element each, wherein the filter element of the respective filter units 1a and 1b comprises a specific adsorbent material on the basis of activated carbon provided with an ASZM-TEDA impregnation. With respect to filter unit 1a, the adsorbent is present in the form of a loose fill and/or bulk, respectively. In this context, the activated carbon is filled into the lumen of an appropriate cartridge having an inlet and an outlet opening allowing for the flow of air through the bulk material. Furthermore, with respect to filter unit 1b, the adsorbent material is fixed onto a three-dimensional air-permeable carrier structure in the form of an open-pored polyurethane foam via an adhesive. Filter units 1a and 1b exhibit essentially the same height referring to the direction of flow through the filter unit in its use state. In this context, the height of filter units 1a and 1b is about 10 mm each and about ten times the height of each filter units 2a to 2b as described hereinafter.

In a second series, comparative filter units 2a, 2b, 2c and 2d are provided. The respective filter units each comprise one filter element only. The adsorbent material is affixed onto a three-dimensional air-permeable carrier structure in the form of a textile sheet material by using an adhesive, wherein the side of the adsorbent material opposite to the carrier structure is also covered with a respective sheetlike textile material (cf. Fig. 1). With respect to filter unit 2a, an activated carbon comprising an acidic impregnation on the basis of sulfuric acid salts is used, wherein according to filter unit 2b a particulate MOF on the basis of Cu₃(BTC)₂ is used. Furthermore, with regard to filter unit 2c, an ion-exchange resin in particulate form is used, especially a cationic ion-exchange resin comprising sulfonic acid groups. Finally, with regard to filter unit 2d, a particulate zeolite is used. Filter units 2a to 2d all exhibit the same height, i.e. about 1 mm each.

**Table 1 specifies the abovementioned filter units 1a, 1b as well as 2a to 2d:**

| Filter Unit | 1^{st} filter element; h = 10 mm | 2^{nd} filter element; h = 1 mm |
|---|---|---|
| 1a | activated carbon with ASZM-TEDA (loose fill) | --- |
| 1b | activated carbon with ASZM-TEDA (carrier) | --- |
| 2a | --- | activated carbon with acidic impregnation (carrier) |
| 2b | --- | MOF Cu₃(BTC)₂ (carrier) |
| 2c | --- | ion-exchange resin (carrier) |
| 2d | --- | zeolite (carrier) |

### 2. Comparative adsorptive filter unit on the basis of two filter elements:

Moreover, an adsorptive filter unit 3a is made which consists of two filter elements as described with respect to filter unit 1b, i.e. comparative filter unit 3a consists of two identical filter elements on the basis of an ASZM-TEDA impregnated active carbon affixed onto a three-dimensional carrier. The respective filter elements are stapled onto each other and affixed to each other via a discontinuously applied adhesive.

**Table 2 specifies the abovementioned filter unit 3a:**

| Filter Unit | 1^{st} filter element; h = 10 mm | 2^{nd} filter element; h = 10 mm |
|---|---|---|
| 3a | activated carbon with ASZM-TEDA (loose fill) | activated carbon with ASZM-TEDA (carrier) |

### 3. Adsorptive filter units on the basis of a combination of two different filter elements:

Moreover, adsorptive filter units 4a, 4b, 4c and 4d are provided. In particular, an filter unit is produced, which consists of two filter elements, wherein the first filter element is for all adsorptive filter elements 4a, 4b, 4c and 4d as described with respect to filter unit 1b, i.e. all adsorptive filter units 4a, 4b, 4c and 4d each comprise a first filter element on the basis of an ASZM-TEDA impregnated activated carbon with an open-pored polyurethane foam as the carrier structure of the activated carbon. The second filter element of filter unit 4a corresponds to filter unit 2a, i.e. the second filter element of 4a comprises an activated carbon having an acidic impregnation on the basis of sulfuric acid salts affixed on a respective carrier structure. Furthermore, filter units 4b (of the invention) to 4d correspond to filter unit 4a with the proviso that according to filter unit 4b a second filter element on the basis of a specific MOF as defined in filter unit 2b is used, and that according to filter unit 4c a second filter element on the basis of a cationic ion-exchange resin as defined in filter unit 2c is used, and, finally, that according to filter unit 4d a second filter element on the basis of zeolite as defined in filter unit 2d is used.

**Table 3 specifies the aforementioned filter units 4a to 4d:**

| Filter Unit | 1^{st} filter element; h = 10 mm | 2^{nd} filter element; h = 1 mm |
|---|---|---|
| 4a | activated carbon with ASZM-TEDA (carrier) | activated carbon with acidic impregnation (carrier) |
| 4b | activated carbon with ASZM-TEDA (carrier) | MOF Cu₃(BTC)₂ (carrier) |
| 4c | activated carbon with ASZM-TEDA (carrier) | ion-exchange resin (carrier) |
| 4d | activated carbon with ASZM-TEDA (carrier) | zeolite (carrier) |

### 4. Test series and experimental data:

The above named comparative and inventive filter units are investigated with respect of their protective performance with regard to noxiant substances, especially ammonia (NH₃).
(i) For this purpose, the respective filter units are exposed to a stream of air enriched with a defined amount of NH₃, wherein the NH₃-concentration is adjusted to 1,000 mg/m³ at an air flow speed of 4.8 cm/s and a temperature of T = 24 °C and wherein the relative humidity of the air to be purified is set at 25 % RH. The breakthrough of NH₃ is determined on the basis of the cumulative breakthrough value (CT), wherein also the breakthrough time (BTₜ) is determined for a breakthrough value of 25 ppm NH₃. The tests are performed with the proviso that - if present - the second filter element is arranged downstream of the first filter element.
In general, high values of BTₜ correspond to a high performance of the tested filter units since it refers to the time period from the beginning of the test to the breakthrough of a defined concentration of the substance to be adsorbed (i.e. the higher the BTₜ-values the higher the filtering performance).
In this context, with increasing BTₜ-values, however, the CT-values may increase since over the whole time period until breakthrough (i.e. until passing the breakthrough threshold concentration at the filter output) very small residual amounts of the substance to be adsorbed (i.e. less than the threshold value for the determination of the breakthrough time) may pass through the filter unit and cumulate over the time period until BTₜ. Especially, filter units with high performance exhibit a balanced behavior of high BTₜ-values and moderate or acceptable CT-values.

**Table 4 shows the results obtained in this regard for comparative Examples 1a and 1b, 2a to 2d, 3a and for Examples 4a to 4d:**

| Filter Unit | BTₜ (min) | CT (mg · min / m³) |
|---|---|---|
| 1a | 20 | 207 |
| 1b | 27 | 257 |
| 2a | 6 | 13 |
| 2b | 11 | 8 |
| 2c | 5 | 15 |
| 2d | 4 | 12 |
| 3a | 35 | 231 |
| 4a | 95 | 106 |
| 4b | 125 | 95 |
| 4c | 83 | 129 |
| 4d | 73 | 135 |

The test results show that the adsorption performance of the inventive filter units is significantly improved, resulting in increased breakthrough times as well as improved cumulative breakthrough values. Thus, the above test series demonstrates that the protective performance of the inventive filter units on the basis of two filter elements differing from each other and being specifically arranged to each other with regard to the flow direction of air surprisingly complement each other synergistically, i.e. beyond the sum of the individual effects.
(ii) A further test series is performed, on the one hand, on the basis of filter unit 4b, wherein the respective filter elements of filter unit 4b are now arranged insofar as the second filter element is positioned upstream of the first filter and, on the other hand, on the basis of a further filter unit 5a, comprising a filter element according to filter unit 1b and two filter elements according to filter unit 2b, wherein the latter elements are positioned downstream to the first filter element.

**Table 5 depicts the respective results:**

| Filter Unit | BTₜ (min) | CT (mg · min / m³) |
|---|---|---|
| 4b (reversed arrangement) | 56 | 183 |
| 5a | 132 | 102 |

The test results point to the importance of the specific arrangement of the filter elements with respect to the flow direction of air through the filter unit (cf. results of filter unit 4b in Table 1). Furthermore, the addition of a further second filter element as performed in filter unit 5a does only lead to minor changes in adsorption properties (cf. results of filter unit 4b in Table 1).
(iii) A further test series is performed on the basis of filter unit 4b, wherein the relative humidity of the air to be purified is changed.

**Table 6 depicts the respective results:**

| relative humidity (% RH) | BTₜ (min) | CT (mg · min / m³) |
|---|---|---|
| 25 | 125 | 95 |
| 50 | 145 | 108 |
| 75 | 163 | 117 |

The test results point to the influence of the humidity of the air to be purified, wherein a higher humidity results in a further improvement of the adsorption performance of the inventive filter unit.

### 5. Test series on further adsorptive filter units on the basis of a combination of two different filter elements:

Finally, comparative adsorptive filter units 6a and 6b as well as 7a, on the one hand, and adsorptive filter units 6a', 6b' as well as 7a' are provided. The comparative filter units 6a, 6b as well as 7a exhibit only a single filter element on the basis of a filter element having a height of about 10 mm as defined in the following Table 7. Filter units 6a', 6b' as well as 7a' correspond to filter units 6a, 6b as well as 7a' with the proviso that an additional (i.e. second) filter element on the basis of a high density MOF-medium (Cu₃(BTC)₂) with a height of about 1.8 mm as defined in the below Table 7 is arranged downstream to the first filter element. Thus, two different filter arrangements are tested, i.e. a first series on the basis of one filter element only and a second series, the filter units of which comprise an additional Cu₃(BTC)₂-filter element arranged downstream of the first filter element. Furthermore, also the influence of the humidity of the air to be purified is tested.

For this purpose, the respective filter units are exposed to a stream of air enriched with a defined amount of NH₃, wherein the NH₃-concentration is adjusted to 1,000 mg/m³ at an air flow speed of 5.4 cm/s and a temperature of T = 25 °C and wherein the relative humidity of the air to be purified is set at 15 % RH and 70 % RH, respectively. The breakthrough time (BTₜ) of NH₃ is determined for a breakthrough value of 35 mg/m³ NH₃.

**Table 7 depicts the results for a relative humidity of 70 % RH:**

| Filter Unit | 1^{st} filter element | 2^{nd} filter element | BTₜ (min) | change BT, (%) | comments |
|---|---|---|---|---|---|
| 6a | activated carbon Z-impregnation (carrier) | --- | 25 | --- | only one filter element; high NH₃ capacity at humid conditions |
| 6a' | activated carbon Z-impregnation (carrier) | MOF Cu₃(BTC)₂ (carrier) | 46 | 84 | high density MOF-medium, significantly longer breakthrough time |
| 6b | activated carbon SZ-TEDA (carrier) | --- | 4 | --- | only one filter element; relatively low NH₃ capacity |
| 6b' | activated carbon SZ-TEDA (carrier) | MOF Cu₃(BTC)₂ (carrier) | 9 | 125 | high density MOF-medium, significantly longer breakthrough time |
| 7a | zeolite (carrier) | --- | 20 | --- | only one filter element; relatively high NH₃ capacity |
| 7a' | zeolite (carrier) | MOF Cu₃(BTC)₂ (carrier) | 44 | 120 | high density MOF-medium, significantly longer breakthrough time |

**Table 8 depicts the results for a relative humidity of 15 % RH:**

| Filter Unit | 1^{st} filter element | 2^{nd} filter element | BTₜ (min) | change BTₜ (%) | comments |
|---|---|---|---|---|---|
| 6a | activated carbon Z-impregnation (carrier) | --- | 15 | --- | only one filter element; moderate NH₃ capacity at dry conditions |
| 6a' | activated carbon Z-impregnation (carrier) | MOF Cu₃(BTC)₂ (carrier) | 55 | 267 | high density MOF-medium, longest breakthrough time, best result |
| 6b | activated carbon SZ-TEDA (carrier) | --- | 4 | --- | only one filter element; relatively low NH₃ capacity |
| 6b' | activated carbon SZ-TEDA (carrier) | MOF Cu₃(BTC)₂ (carrier) | 11 | 175 | high density MOF-medium, significantly longer breakthrough time |
| 7a | zeolite (carrier) | --- | 22 | --- | only one filter element; relatively high NH₃ capacity |
| 7a' | zeolite (carrier) | MOF Cu₃(BTC)₂ (carrier) | 54 | 145 | high density MOF-medium, significantly longer breakthrough time |

Also this test series shows that the protective performance of the filter units on the basis of two filter elements differing from each other and being specifically arranged to each other surprisingly complement each other synergistically, i.e. beyond the sum of the individual effects. The test results also show the influence of the humidity of the air to be purified, wherein a higher humidity results in a further improvement of the adsorption performance of the inventive filter unit.

The results thus altogether document the excellent protective performance on the basis of outstanding adsorption characteristics of the inventive filter unit, which performance is significantly improved over the prior art.

## Claims

1. Adsorptive filter unit (FU) for the purification of gases and/or gas mixtures and/or for the removal of chemical and/or biological substances or noxiants from gases and/or gas mixtures, in particular for use in or as a respiratory filter or gas-mask filter,
wherein the filter unit (FU) comprises a plurality of filter elements (1, 2) which are different from each other,
- wherein the filter unit (FU) comprises at least a first filter element (1) comprising a first adsorbent material (3), wherein the first adsorbent material (3) is selected from granular activated carbon particles, which activated carbon particles are provided with at least one reactive and/or catalytically active component based on a metal or a metal compound, wherein the reactive and/or catalytically active component of the first adsorbent material (3) is based on a combination of
(i) copper,
(ii) silver,
(iii) zinc,
(iv) molybdenum,
(v) optionally triethylenediamine (TEDA);
- wherein the filter unit (FU) comprises at least a second filter element (2) arranged downstream of the first filter element (1) and/or arranged after the first filter element (1) with respect to the flow direction in the use-state of the filter unit (FU), wherein the second filter element (2) comprises a second adsorbent material (3') different from the first adsorbent material (3), wherein the second adsorbent material (3') is selected from metal-organic framework materials (MOFs), wherein the second adsorbent material (3') is present in granular form, and wherein the metal-organic framework material (MOF) of the second adsorbent material (3') comprises at least one metal selected from the group consisting of Zn, Cu, Ni, Pd, Pt, Ru, Fe, Mn, Ag, Al and Co;
- wherein the ratio of the height (h1) of the first filter element (1) to the height (h2) of the second filter element (2) [ratio h1 : h2], each based on the size in parallel to the direction of flow (R), is in the range of from 3 : 1 to 25 : 1.

2. The adsorptive filter unit according to Claim 1,
wherein the first adsorbent material (3) comprises the reactive and/or catalytically active component in an amount in the range of from 0.0001 % by weight to 20 % by weight, especially in the range of from 0.001 % by weight to 15 % by weight, preferably in the range of from 0.01 % by weight to 10 % by weight, more preferably in the range of from 0.05 % by weight to 8 % by weight, yet more preferably in the range of from 0.1 % by weight to 6 % by weight, based on the first adsorbent material (3).

3. The adsorptive filter unit according to claim 1 or 2, wherein the reactive and/or catalytically active component of the first adsorbent material (3) is based on a combination of
(i) copper(II) carbonate (CuCO₃);
(ii) elemental silver;
(iii) zinc(II) carbonate (ZnCO₃);
(iv) ammonium dimolybdate;
(v) triethylenediamine (TEDA);
especially wherein the weight ratio of (i) copper / (ii) silver / (iii) zinc / (iv) molybdenum is in the range of from 1 to 10 / 0.01 to 2 / 1 to 10 / 0.2 to 8, especially 3 to 6 / 0.02 to 0.5 / 3 to 6 / 0.5 to 3 , and preferably about 5 / 0.05 / 5 / 2, and/or
especially wherein the reactive and/or catalytically active component of the first adsorbent material (3) additionally contains (v) triethylenediamine (TEDA), wherein the amount ratio of (i) copper / (ii) silver / (iii) zinc / (iv) molybdenum / (v) triethylenediamine (TEDA) is in the range of from 1 to 10/0.01 to 2 / 1 to 10/ 0.2 to 8 / 0.3 to 9, especially 3 to 6 / 0.02 to 0.5 / 3 to 6 / 0.5 to 3 / 1 to 4, and preferably about 5 / 0.05 / 5 /2 / 3.

4. The adsorptive filter unit according to any of the preceding claims,
wherein the first adsorbent material (3) has a mean particle diameter in the range of from 0.01 to 2.0 mm, in particular in the range of from 0.05 to 1.0 mm, preferably in the range of from 0.1 to 1.0 mm, and/or wherein the first adsorbent material (3) has a bursting pressure of at least 0,5 Newtons, especially at least 1 Newtons, preferably at least 2 Newtons, especially a bursting pressure in the range of from 0,5 Newtons to 20 Newtons, especially in the range of from 0,5 Newtons to 10 Newtons, per active carbon particle or active carbon bead, and/or
wherein the first adsorbent material (3) has an apparent (bulk) density in the range of from 500 g/l to 1,000 g/l, especially in the range of from 550 g/l to 900 g/l, preferably in the range of from 600 g/l to 800 g/l, and/or wherein the first adsorbent material (3) in the form of activated carbon has a total porosity in the range of from 40 % to 70 %, especially in the range of from 45 % to 65 %, preferably in the range of from 50 % to 60 %, based on the first adsorbent material (3).

5. The adsorptive filter unit according to any of the preceding claims,
wherein the average particle diameter of the second adsorbent material (3') is in the range of from 0.01 µm to 5 mm, especially in the range of from 0.1 µm to 3 mm, preferably in the range of from 0.2 µm to 2.5 mm, more preferably in the range of from 0.5 µm to 2.0 mm, yet more preferably in the range of from 1 µm to 1.5 mm, and/or
wherein the second adsorbent material (3') consists of the at least one metal-organic framework material (MOF) and/or wherein the second adsorbent material (3') comprises the at least one metal-organic framework (MOF) in bulk and/or wherein the second adsorbent material (3') comprises a mixture of metal-organic framework material (MOF) and a preferably organic binder and/or wherein the second adsorbent material (3') comprises the at least one metal-organic framework material (MOF) in a form incorporated in an organic binder.

6. The adsorptive filter unit according to any of the preceding claims,
wherein the metal-organic framework material (MOF) of the second adsorbent material (3') comprises repeating structural units based in each case on at least one metal, in particular metal atom or metal ion, and at least one at least bidentate and/or bridging organic ligand and/or
wherein the metal-organic framework material (MOF) of the second adsorbent material (3') comprises at least one at least bidentate and/or bridging organic ligand which has at least one functional group which is capable of forming at least two coordinate bonds to a metal, in particular metal atom or metal ion, and/or forming a coordinate bond to each of two more metals, especially metal atoms or metal ions, identical or different, where, in particular, the functional group of the ligand has at least one heteroatom, preferably from the group consisting of N, O, S, B, P, Si and Al, more preferably N, O and S.

7. The adsorptive filter unit according to any of the preceding claims,
wherein the metal-organic framework material (MOF) is selected from the group consisting of Cu₃(BTC)₂, Zn₂(BTC)₂(DABCO), Al(NDC) and combinations thereof, especially Cu₃(BTC)₂, and/or
wherein the metal-organic framework material (MOF) of the second adsorbent material (3') has a total pore volume determined by the Gurvich method in the range of from 0.1 cm³/g to 5.0 cm³/g, in particular in the range of from 0.2 cm³/g to 4.5 cm³/g, preferably in the range of from 0.3 cm³/g to 4.0 cm³/g, and a BET surface area in the range of from 100 m²/g to 5,000 m²/g, in particular in the range of from 150 m²/g to 4,750 m²/g, preferably in the range of from 200 m²/g to 4,500 m²/g, particularly preferably in the range of from 250 m²/g to 4,250 m²/g, very particularly preferably in the range of from 500 m²/g to 4,000 m²/g.

8. The adsorptive filter unit according to any of the preceding claims,
wherein the first filter element (1) comprises the first adsorbent material (3) in an amount in the range of from 20 % by weight to 100 % by weight, especially in the range of from 30 % by weight to 95 % by weight, preferably in the range of from 40 % by weight to 90 % by weight, more preferably in the range of from 50 % by weight to 85 % by weight, yet more preferably in the range of from 60 % by weight to 80 % by weight, based on the first filter element (1), wherein the first adsorbent material (3) of the first filter element (1) is fixed in and/or on at least one carrier structure (4), and/or
wherein the second filter element (2) comprises the second adsorbent material (3') in an amount in the range of from 15 % by weight to 100 % by weight, especially in the range of from 25 % by weight to 95 % by weight, preferably in the range of from 30 % by weight to 80 % by weight, more preferably in the range of from 35 % by weight to 75 % by weight, yet more preferably in the range of from 40 % by weight to 70 % by weight %, based on the second filter element (2), wherein the second adsorbent material (3') of the second filter element (2) is fixed in and/or on at least one carrier structure (5).

9. The adsorptive filter unit according to Claim 8,
wherein the carrier structure (4) and/or the carrier structure (5), independently from each other, are gas-permeable, in particular air-permeable, and in particular have a gas permeability, in particular air permeability, of at least 10 l·m⁻²·s⁻¹, in particular at least 30 l·m⁻²·s⁻¹, preferably at least 50 l·m⁻²·s⁻¹, more preferably at least 100 l·m⁻²·s⁻¹, yet particularly preferably at least 500 l·m⁻²·s⁻¹, and/or up to 10,000 l·m⁻²·s⁻¹, in particular up to 20,000 l·m⁻²·s⁻¹, at a flow resistance of 127 Pa.

10. The adsorptive filter unit according to any of the preceding claims,
wherein the first filter element (1) has a height (h1), based on the size in parallel to the direction of flow (R), in the range of from 1 mm to 100 mm, especially in the range of from 2 mm to 75 mm, preferably in the range of from 3 mm to 50 mm, more preferably in the range of from 4 mm to 40 mm, yet more preferably in the range of from 5 mm to 30 mm, and/or wherein the first filter element (1) has a weight per unit area in the range of from 10 g/m² to 1,500 g/m², especially in the range of from 20 g/m² to 500 g/m², preferably in the range of from 30 g/m² to 400 g/m², more preferably in the range of from 40 g/m² to 300 g/m², and/or
wherein the second filter element (2) has a height (h2), based on the size in parallel to the direction of flow (R) in the use state of the adsorptive filter unit, in the range of from 0,05 mm to 50 mm, especially in the range of from 0,1 mm to 30 mm, preferably in the range of from 0,15 mm to 10 mm, more preferably in the range of from 0,2 mm to 5 mm, yet more preferably in the range of from 0,4 mm to 4 mm, even more preferably in the range of from 0,5 mm to 3 mm, and/or wherein the second filter element (2) has weight per unit area in the range of from 5 g/m² to 1,000 g/m², especially in the range of from 5 g/m² to 400 g/m², preferably in the range of from 10 g/m² to 300 g/m², more preferably in the range of from 15 g/m² to 200 g/m², and/or
wherein the ratio of the height (h1) of the first filter element (1) to the height (h2) of the second filter element (2) [ratio h1 : h2], each based on the size in parallel to the direction of flow (R), is in the range of from 3 : 1 to 15 : 1, preferably in the range of from 3 : 1 to 12 : 1, more preferably in the range of from 3 : 1 to 10 : 1.

11. A process for the purification of gases and/or gas mixtures, preferably air, and/or for the removal of chemical and/or biological substances or noxiants from gases and/or gas mixtures, preferably air, wherein the process comprises a process step of contacting a gas and/or gas mixture to be purified and/or to be cleaned from chemical and/or biological substances or noxiants with an adsorptive filter unit as defined in any of the preceding claims.

12. The use of an adsorptive filter unit as claimed in any of Claims 1 to 10 for producing filters and filter materials of all types, in particular for the removal of pollutants, odorous substances and poisons of all types, in particular from streams of air and/or gas, for example NBC protective mask filters, odor filters, sheet-like filters, air filters, in particular filters for purification of air in a room, adsorptive support structures and filters for the medical sector.

13. A filter or filter material, in particular for the removal of pollutants, odorous substances and poisons of all types, in particular from streams of air and/or gas, in the form of NBC protective mask filters, odor filters, sheet-like filters, air filters, in particular filters for purifycation of air in a room, adsorptive support structures and filters for the medical sector, comprising an adsorptive filter unit as claimed in any of Claims 1 to 10.

## Patentansprüche

1. Adsorptive Filtereinheit (FE) zur Reinigung von Gasen und/oder Gasgemischen und/oder zum Entfernen von chemischen und/oder biologischen Substanzen oder Schadstoffen aus Gasen und/oder Gasgemischen, insbesondere zur Verwendung in oder als Atemfilter oder Gasmaskenfilter,
wobei die Filtereinheit (FE) eine Vielzahl von Filterelementen (1, 2) umfasst, die sich voneinander unterscheiden,
- wobei die Filtereinheit (FE) zumindest ein erstes Filterelement (1) umfasst, das ein erstes adsorbierendes Material (3) umfasst, wobei das erste adsorbierende Material (3) aus aktivierten granulierten Kohlenstoffteilchen ausgewählt ist, wobei die aktivierten Kohlenstoffteilchen mit zumindest einer reaktiven und/oder katalytisch aktiven Komponente basierend auf einem Metall oder einer Metallverbindung bereitgestellt werden, wobei die reaktive und/oder katalytisch aktive Komponente des ersten adsorbierenden Materials (3) auf einer Kombination aus
(i) Kupfer,
(ii) Silber,
(iii) Zink,
(iv) Molybdän,
(v) gegebenenfalls Triethylendiamin (TEDA) basiert;
- wobei die Filtereinheit (FE) zumindest ein zweites Filterelement (2) umfasst, das, bezogen auf die Strömungsrichtung im Benutzungszustand der Filtereinheit (FE), stromab des ersten Filterelements (1) und/oder nach dem ersten Filterelement (1) angeordnet ist, wobei das zweite Filterelement (2) ein zweites adsorbierendes Material (3') umfasst, das sich von dem ersten adsorbierenden Material (3) unterscheidet, wobei das zweite adsorbierende Material (3') aus metallorganischen Gerüstmaterialien (MOF) ausgewählt ist, wobei das zweite adsorbierende Material (3') in Granulatform vorliegt, und wobei das metallorganische Gerüstmaterial (MOF) des zweiten adsorbierenden Materials (3') zumindest ein Metall umfasst, das aus der Gruppe bestehend aus Zn, Cu, Ni, Pd, Pt, Ru, Fe, Mn, Ag, Al und Co ausgewählt ist;
- wobei das Verhältnis der Höhe (h1) des ersten Filterelements (1) zu der Höhe (h2) des zweiten Filterelements (2) [Verhältnis h1 : h2], die jeweils auf der Größe parallel zur Strömungsrichtung (R) basieren, im Bereich von 3 : 1 bis 25 : 1 liegt.

2. Adsorptive Filtereinheit nach Anspruch 1,
wobei das erste adsorbierende Material (3) die reaktive und/oder katalytisch aktive Komponente in einer Menge im Bereich von 0,0001 Gew.-% bis 20 Gew.-%, insbesondere im Bereich von 0,001 Gew.-% bis 15 Gew.-%, vorzugsweise im Bereich von 0,01 Gew.-% bis 10 Gew.-%, noch bevorzugter im Bereich von 0,05 Gew.-% bis 8 Gew.-%, sogar noch bevorzugter im Bereich von 0,1 Gew.-% bis 6 Gew.-%, bezogen auf das erste adsorbierende Material (3), umfasst.

3. Adsorptive Filtereinheit nach Anspruch 1 oder 2, wobei die reaktive und/oder katalytisch aktive Komponente des ersten adsorbierenden Materials (3) auf einer Kombination aus
(i) Kupfer(II)carbonat (CuCO₃);
(ii) elementarem Silber;
(iii) Zink(II)carbonat (ZnCO₃);
(iv) Ammoniumdimolybdat;
(v) Triethylendiamin (TEDA) basiert;
insbesondere wobei das Gewichtsverhältnis von (i) Kupfer / (ii) Silber / (iii) Zink / (iv) Molybdän im Bereich von 1 bis 10 / 0,01 bis 2 / 1 bis 10 / 0,2 bis 8, insbesondere 3 bis 6 / 0,02 bis 0,5 / 3 bis 6 / 0,5 bis 3 und vorzugsweise bei etwa 5 / 0,05 / 5 / 2 liegt, und/oder
insbesondere wobei die reaktive und/oder katalytisch aktive Komponente des ersten adsorbierenden Materials (3) zusätzlich dazu (v) Triethylendiamin (TEDA) enthält, wobei das Mengenverhältnis von (i) Kupfer / (ii) Silber / (iii) Zink / (iv) Molybdän / (v) Triethylendiamin (TEDA) im Bereich von 1 bis 10 / 0,01 bis 2 / 1 bis 10 / 0,2 bis 8 / 0,3 bis 9, insbesondere 3 bis 6 / 0,02 bis 0,5 / 3 bis 6 / 0,5 bis 3 / 1 bis 4 und vorzugsweise etwa 5 / 0,05 / 5 / 2 / 3 liegt.

4. Adsorptive Filtereinheit nach einem der vorangegangenen Ansprüche,
wobei das erste adsorbierende Material (3) einen mittleren Teilchendurchmesser im Bereich von 0,01 bis 2,0 mm, insbesondere im Bereich von 0,05 bis 1,0 mm, vorzugsweise im Bereich von 0,1 bis 1,0 mm aufweist, und/oder wobei das erste adsorbierende Material (3) einen Berstdruck von zumindest 0,5 Newton, insbesondere zumindest 1 Newton, vorzugsweise zumindest 2 Newton, insbesondere einen Berstdruck im Bereich von 0,5 Newton bis 20 Newton, insbesondere im Bereich von 0,5 Newton bis 10 Newton pro aktivem Kohlenstoffteilchen oder aktivem Kohlenstoffkügelchen aufweist, und/oder
wobei das erste adsorbierende Material (3) eine offensichtliche (Schütt-) Dichte im Bereich von 500 g/l bis 1000 g/l, insbesondere im Bereich von 550 g/l bis 900 g/l, vorzugsweise im Bereich von 600 g/l bis 800 g/l aufweist, und/oder wobei das erste adsorbierende Material (3) in Form von aktiviertem Kohlenstoff eine Gesamtporosität im Bereich von 40 % bis 70 %, insbesondere im Bereich von 45 % bis 65 %, vorzugsweise im Bereich von 50 % bis 60 %, bezogen auf das erste adsorbierende Material (3), aufweist.

5. Adsorptive Filtereinheit nach einem der vorangegangenen Ansprüche,
wobei der durchschnittliche Teilchendurchmesser des zweiten adsorbierenden Materials (3') im Bereich von 0,01 µm bis 5 mm, insbesondere im Bereich von 0,1 µm bis 3 mm, vorzugsweise im Bereich von 0,2 µm bis 2,5 mm, noch bevorzugter im Bereich von 0,5 µm bis 2,0 mm, sogar noch bevorzugter im Bereich von 1 µm bis 1,5 mm liegt, und/oder
wobei das zweite adsorbierende Material (3') aus dem zumindest einen metallorganischen Gerüstmaterial (MOF) besteht und/oder wobei das zweite adsorbierende Material (3') das zumindest eine metallorganische Gerüstmaterial (MOF) als Hauptanteil umfasst, und/oder
wobei das zweite adsorbierende Material (3') ein Gemisch von metallorganischem Gerüstmaterial (MOF) und einem bevorzugt organischen Bindemittel umfasst und/oder wobei das zweite adsorbierende Material (3') das zumindest eine metallorganische Gerüstmaterial (MOF) in einer in ein organisches Bindemittel integrierten Form umfasst.

6. Adsorptive Filtereinheit nach einem der vorangegangenen Ansprüche,
wobei das metallorganische Gerüstmaterial (MOF) des zweiten adsorbierenden Materials (3') wiederholende Struktureinheiten, die in jedem Fall auf zumindest einem Metall, insbesondere einem Metallatom oder einem Metallion basieren, und zumindest ein Bidentat und/oder einen organischen Brückenligand umfasst, und/oder
wobei das metallorganische Gerüstmaterial (MOF) des zweiten adsorbierenden Materials (3') zumindest ein Bidentat und/oder einen organischen Brückenligand umfasst, der zumindest eine funktionelle Gruppe aufweist, die dazu in der Lage ist, zumindest zwei Koordinatenbindungen mit einem Metall, insbesondere einem Metallatom oder einem Metallion, zu bilden, und/oder eine Koordinatenbindung mit jedem aus zwei oder mehr Metallen, insbesondere Metallatomen oder Metallionen, identisch oder verschieden, zu bilden, wobei die funktionelle Gruppe des Liganden insbesondere zumindest ein Heteroatom aufweist, das vorzugsweise aus der Gruppe bestehend aus N, O, S, B, P, Si und Al, noch bevorzugter aus N, O und S, ausgewählt ist.

7. Adsorptive Filtereinheit nach einem der vorangegangenen Ansprüche,
wobei das metallorganische Gerüstmaterial (MOF) aus der Gruppe bestehend aus Cu₃(BTC)₂, Zn₂(BTC)₂(DABCO), Al(NDC) und Kombinationen daraus, insbesondere aus Cu₃(BTC)₂, ausgewählt ist, und/oder
wobei das metallorganische Gerüstmaterial (MOF) des zweiten adsorbierenden Materials (3') ein Gesamtporenvolumen, bestimmt durch die Gurvich-Methode, im Bereich von 0,1 cm³/g bis 5,0 cm³/g, insbesondere im Bereich von 0,2 cm³/g bis 4,5 cm³/g, vorzugsweise im Bereich von 0,3 cm³/g bis 4,0 cm³/g und eine BET-Oberfläche im Bereich von 100 m²/g bis 5000 m²/g, insbesondere im Bereich von 150 m²/g bis 4.750 m²/g, vorzugsweise im Bereich von 200 m²/g bis 4.500 m²/g, besonders bevorzugt im Bereich von 250 m²/g bis 4.250 m²/g, sogar noch bevorzugter im Bereich von 500 m²/g bis 4.000 m²/g aufweist.

8. Adsorptive Filtereinheit nach einem der vorangegangenen Ansprüche,
wobei das erste Filterelement (1) das erste adsorbierende Material (3) in einer Menge im Bereich von 20 Gew.-% bis 100 Gew.-%, insbesondere im Bereich von 30 Gew.-% bis 95 Gew.-%, vorzugsweise im Bereich von 40 Gew.-% bis 90 Gew.-%, noch bevorzugter im Bereich von 50 Gew.-% bis 85 Gew.-%, sogar noch bevorzugter im Bereich von 60 Gew.-% bis 80 Gew.-%, bezogen auf das erste Filterelement (1), umfasst, wobei das erste adsorbierende Material (3) des ersten Filterelements (1) in und/oder auf zumindest einer Trägerstruktur (4) fixiert ist, und/oder
wobei das zweite Filterelement (2) das zweite adsorbierende Material (3') in einer Menge im Bereich von 15 Gew.-% bis 100 Gew.-%, insbesondere im Bereich von 25 Gew.-% bis 95 Gew.-%, vorzugsweise im Bereich von 30 Gew.-% bis 80 Gew.-%, noch bevorzugter im Bereich von 35 Gew.-% bis 75 Gew.-%, sogar noch bevorzugter im Bereich von 40 Gew.-% bis 70 Gew.-%, bezogen auf das zweite Filterelement (2), umfasst, wobei das zweite adsorbierende Material (3') des zweiten Filterelements (2) in und/oder auf zumindest einer Trägerstruktur (5) fixiert ist.

9. Adsorptive Filtereinheit nach Anspruch 8,
wobei die Trägerstruktur (4) und/oder die Trägerstruktur (5) jeweils unabhängig voneinander gasdurchlässig, insbesondere luftdurchlässig sind und bei einem Strömungswiderstand von 127 Pa insbesondere eine Gasdurchlässigkeit, insbesondere eine Luftdurchlässigkeit von zumindest 10 l·m⁻²·s⁻¹, insbesondere zumindest 30 l·m⁻²·s⁻¹, vorzugsweise zumindest 50 l·m⁻²·s⁻¹, noch bevorzugter zumindest 100 l·m⁻²·s⁻¹, sogar noch bevorzugter zumindest 500 l·m⁻²·s⁻¹ und/oder bis zu 10.000 l·m⁻²·s⁻¹, insbesondere bis zu 20.000 l·m⁻²·s⁻¹ aufweisen.

10. Adsorptive Filtereinheit nach einem der vorangegangenen Ansprüche,
wobei das erste Filterelement (1) eine Höhe (h1), basierend auf der Größe parallel zur Strömungsrichtung (R), im Bereich von 1 mm bis 100 mm, insbesondere im Bereich von 2 mm bis 75 mm, bevorzugt im Bereich von 3 mm bis 50 mm, noch bevorzugter im Bereich von 4 mm bis 40 mm, sogar noch bevorzugter im Bereich von 5 mm bis 30 mm aufweist, und/oder wobei das erste Filterelement (1) ein Gewicht pro Einheitsfläche im Bereich von 10 g/m² bis 1.500 g/m², insbesondere im Bereich von 20 g/m² bis 500 g/m², vorzugsweise im Bereich von 30 g/m² bis 400 g/m², noch bevorzugter im Bereich von 40 g/m² bis 300 g/m² aufweist, und/oder
wobei das zweite Filterelement (2) eine Höhe (h2), basierend auf der Größe parallel zur Strömungsrichtung (R) im Benutzungszustand der adsorptiven Filtereinheit, im Bereich von 0,05 mm bis 50 mm, insbesondere im Bereich von 0,1 mm bis 30 mm, vorzugsweise im Bereich von 0,15 mm bis 10 mm, noch bevorzugter im Bereich von 0,2 mm bis 5 mm, sogar noch bevorzugter im Bereich von 0,4 mm bis 4 mm, noch bevorzugter im Bereich von 0,5 mm bis 3 mm aufweist, und/oder wobei das zweite Filterelement (2) ein Gewicht pro Einheitsfläche im Bereich von 5 g/m² bis 1.000 g/m², insbesondere im Bereich von 5 g/m² bis 400 g/m², vorzugsweise im Bereich von 10 g/m² bis 300 g/m², noch bevorzugter im Bereich von 15 g/m² bis 200 g/m² aufweist, und/oder
wobei das Verhältnis der Höhe (h1) des ersten Filterelements (1) zu der Höhe (h2) des zweiten Filterelements (2) [Verhältnis h1 : h2], die jeweils auf der Größe parallel zur Strömungsrichtung (R) basieren, im Bereich von 3 : 1 bis 15 : 1, vorzugsweise im Bereich von 3 : 1 bis 12 : 1, noch bevorzugter im Bereich von 3 : 1 bis 10 : 1 liegt.

11. Verfahren zur Reinigung von Gasen und/oder Gasgemischen, vorzugsweise von Luft, und/oder zum Entfernen von chemischen und/oder biologischen Substanzen oder Schadstoffen aus Gasen und/oder Gasgemischen, vorzugsweise aus Luft, wobei das Verfahren einen Verfahrensschritt des Kontaktierens eines zu reinigenden Gases und/oder Gasgemischs und/oder das von chemischen und/oder biologischen Substanzen oder Schadstoffen zu reinigen ist, mit einer adsorptiven Filtereinheit wie in einem der vorangegangenen Ansprüche definiert.

12. Verwendung einer adsorptiven Filtereinheit nach einem der Ansprüche 1 bis 10 zur Herstellung von Filtern und Filtermaterialien aller Art, insbesondere zum Entfernen von Verunreinigungen, geruchsintensiven Substanzen und Giften aller Art, insbesondere aus Strömungen von Luft und/oder Gas, z.B. von ABC-Schutzmaskenfiltern, Geruchsfiltern, schichtähnlichen Filtern, Luftfiltern, insbesondere von Filtern zur Luftreinigung in einem Raum, adsorptiven Zusatzstrukturen und Filtern für den medizinischen Sektor.

13. Filter oder Filtermaterial, insbesondere zum Entfernen von Verunreinigungen, geruchsintensiven Substanzen und Giften aller Art, insbesondere aus Strömungen von Luft und/oder Gas, in Form von ABC-Schutzmaskenfiltern, Geruchsfiltern, schichtähnlichen Filtern, Luftfiltern, insbesondere Filtern zur Luftreinigung in einem Raum, adsorptiven Zusatzstrukturen und Filtern für den medizinischen Bereich, umfassend eine adsorptive Filtereinheit nach einem der Ansprüche 1 bis 10.

## Revendications

1. Unité de filtration (UF) par adsorption pour la purification de gaz et/ou de mélanges gazeux et/ou pour l'élimination de substances chimiques et/ou biologiques ou de substances nocives de gaz et/ou de mélanges gazeux, en particulier destinée à être utilisée dans ou comme filtre respiratoire ou filtre de type masque à gaz, l'unité de filtration (UF) comprenant une pluralité d'éléments de filtration (1, 2) qui sont différents les uns des autres,
- l'unité de filtration (UF) comprenant au moins un premier élément de filtration (1) comprenant un premier matériau adsorbant (3), le premier matériau adsorbant (3) étant choisi parmi des particules de charbon actif granulaires, lesquelles particules de charbon actif sont fournies avec au moins un constituant réactif et/ou catalytiquement actif basé sur un métal ou un composé métallique, le constituant réactif et/ou catalytiquement actif du premier matériau adsorbant (3) étant basé sur une combinaison de
(i) cuivre,
(ii) argent,
(iii) zinc,
(iv) molybdène,
(v) éventuellement triéthylènediamine (TEDA) ;
- l'unité de filtration (UF) comprenant au moins un second élément de filtration (2) disposé en aval du premier élément de filtration (1) et/ou disposé après le premier élément de filtration (1) par rapport au sens d'écoulement dans l'état d'utilisation de l'unité de filtration (UF), le second élément de filtration (2) comprenant un second matériau adsorbant (3') différent du premier matériau adsorbant (3), le second matériau adsorbant (3') étant choisi parmi des matériaux de structure organométallique (MOF), le second matériau adsorbant (3') étant présent sous forme granulaire, et le matériau de structure organométallique (MOF) du second matériau adsorbant (3') comprenant au moins un métal choisi dans le groupe constitué par Zn, Cu, Ni, Pd, Pt, Ru, Fe, Mn, Ag, Al et Co ;
- le rapport de la hauteur (h1) du premier élément de filtration (1) à la hauteur (h2) du second élément de filtration (2) [rapport h1 : h2], chacune étant basée sur la taille parallèle au sens d'écoulement (R), étant compris dans la plage de 3 : 1 à 25 : 1.

2. Unité de filtration par adsorption selon la revendication 1,
dans laquelle le premier matériau adsorbant (3) comprend le constituant réactif et/ou catalytiquement actif en une quantité comprise dans la plage de 0,0001 % en poids à 20 % en poids, en particulier dans la plage de 0,001 % en poids à 15 % en poids, de préférence dans la plage de 0,01 % en poids à 10 % en poids, plus préférablement dans la plage de 0,05 % en poids à 8 % en poids, encore plus préférablement dans la plage de 0,1 % en poids à 6 % en poids, en se basant sur le premier matériau adsorbant (3).

3. Unité de filtration par adsorption selon la revendication 1 ou 2, dans laquelle le constituant réactif et/ou catalytiquement actif du premier matériau adsorbant (3) est basé sur une combinaison de
(i) carbonate de cuivre(II) (CuCO₃) ;
(ii) argent élémentaire ;
(iii) carbonate de zinc(II) (ZnCO₃) ;
(iv) dimolybdate d'ammonium ;
(v) triéthylènediamine (TEDA) ;
en particulier dans laquelle le rapport pondéral de (i) cuivre / (ii) argent / (iii) zinc / (iv) molybdène est compris dans la plage de 1 à 10 / 0,01 à 2 / 1 à 10 / 0,2 à 8, en particulier de 3 à 6 / 0,02 à 0,5 / 3 à 6 / 0,5 à 3, et de préférence d'environ 5 / 0,05 / 5 / 2 et/ou
en particulier dans laquelle le constituant réactif et/ou catalytiquement actif du premier matériau adsorbant (3) contient en outre (v) de la triéthylènediamine (TEDA), dans laquelle le rapport de quantité de (i) cuivre / (ii) argent / (iii) zinc / (iv) molybdène / (v) triéthylènediamine (TEDA) est compris dans la plage de 1 à 10 / 0,01 à 2 / 1 à 10 / 0,2 à 8 / 0,3 à 9, en particulier de 3 à 6 / 0,02 à 0,5 / 3 à 6 / 0,5 à 3 / 1 à 4, et de préférence d'environ 5 / 0,05 / 5 / 2 / 3.

4. Unité de filtration par adsorption selon l'une quelconque des revendications précédentes,
dans laquelle le premier matériau adsorbant (3) a un diamètre de particule moyen compris dans la plage de 0,01 et 2,0 mm, en particulier dans la plage de 0,05 à 1,0 mm, de préférence dans la plage de 0,1 à 1,0 mm, et/ou dans laquelle le premier matériau adsorbant (3) a une pression d'éclatement d'au moins 0,5 Newtons, en particulier d'au moins 1 Newtons, de préférence d'au moins 2 Newtons, en particulier une pression d'éclatement comprise dans la plage de 0,5 Newtons à 20 Newtons, en particulier dans la plage de 0,5 Newtons à 10 Newtons, par particule de charbon actif ou bille de carbone actif, et/ou
dans laquelle le premier matériau adsorbant (3) a une masse volumique apparente (bulk) comprise dans la plage de 500 g/l à 1 000 g/l, en particulier dans la plage de 550 g/l à 900 g/l, de préférence dans la plage de 600 g/l à 800 g/l, et/ou dans laquelle le premier matériau adsorbant (3) sous forme de charbon actif a une porosité totale comprise dans la plage de 40 % à 70 %, en particulier dans la plage de 45 % à 65 %, de préférence dans la plage de 50 % à 60 %, en se basant sur le premier matériau adsorbant (3).

5. Unité de filtration par adsorption selon l'une quelconque des revendications précédentes,
dans laquelle le diamètre de particule moyen du second matériau adsorbant (3') est compris dans la plage de 0,01 µm à 5 mm, en particulier dans la plage de 0,1 µm à 3 mm, de préférence dans la plage de 0,2 µm à 2,5 mm, plus préférablement dans la plage de 0,5 µm à 2,0 mm, encore plus préférablement dans la plage de 1 µm à 1,5 mm, et/ou
dans laquelle le second matériau adsorbant (3') est constitué d'au moins un matériau de structure organométallique (MOF) et/ou dans laquelle le second matériau adsorbant (3') comprend l'au moins une structure organométallique (MOF) en vrac et/ou
dans laquelle le second matériau adsorbant (3') comprend un mélange de matériau de structure organométallique (MOF) et d'un liant de préférence organique et/ou dans laquelle le second matériau adsorbant (3') comprend l'au moins un matériau de structure organométallique (MOF) sous une forme incorporée dans un liant organique.

6. Unité de filtration par adsorption selon l'une quelconque des revendications précédentes,
dans laquelle le matériau de structure organométallique (MOF) du second matériau adsorbant (3') comprend des motifs structurels répétitifs basés dans chaque cas sur au moins un métal, en particulier un atome de métal ou un ion métallique, et au moins un ligand au moins bidenté et/ou organique pontant et/ou dans laquelle le matériau de structure organométallique (MOF) du second matériau adsorbant (3') comprend au moins un ligand au moins bidenté et/ou organique pontant qui a au moins un groupe fonctionnel capable de former au moins deux liaisons de coordination sur un métal, en particulier un atome de métal ou un ion métallique, et/ou de former une liaison de coordination sur chacun de deux métaux supplémentaires, en particulier des atomes de métal ou des ions métalliques, identiques ou différents, où en particulier le groupe fonctionnel du ligand comprend au moins un hétéroatome, de préférence dans le groupe constitué par N, O, S, B, P, Si et Al, plus préférablement N, O et S.

7. Unité de filtration par adsorption selon l'une quelconque des revendications précédentes,
dans laquelle le matériau de structure organométallique (MOF) est choisi dans le groupe constitué par Cu₃(BTC)₂, Zn₂(BTC)₂(DABCO), Al(NDC) et des combinaisons de ceux-ci, en particulier Cu₃(BTC)₂, et/ou
dans laquelle le matériau de structure organométallique (MOF) du second matériau adsorbant (3') a un volume total de pores déterminé par la méthode Gurvich compris dans la plage de 0,1 cm³/g à 5,0 cm³/g, en particulier dans la plage de 0,2 cm³/g à 4,5 cm³/g, de préférence dans la plage de 0,3 cm³/g à 4,0 cm³/g, et une surface BET comprise dans la plage de 100 m²/g à 5 000 m²/g, en particulier dans la plage de 150 m²/g à 4 750 m²/g, de préférence dans la plage de 200 m²/g à 4 500 m²/g, plus particulièrement dans la plage de 250 m²/g à 4 250 m²/g, idéalement dans la plage de 500 m²/g à 4 000 m²/g.

8. Unité de filtration par adsorption selon l'une quelconque des revendications précédentes,
dans laquelle le premier élément de filtration (1) comprend le premier matériau adsorbant (3) en une quantité comprise dans la plage de 20 % en poids à 100 % en poids, en particulier dans la plage de 30 % en poids à 95 % en poids, de préférence dans la plage de 40 % en poids à 90 % en poids, plus préférablement dans la plage de 50 % en poids à 85 % en poids, encore plus préférablement dans la plage de 60 % en poids à 80 % en poids, en se basant sur le premier élément de filtration (1), le premier matériau adsorbant (3) du premier élément de filtration (1) étant fixé dans et/ou sur au moins une structure porteuse (4), et/ou
dans laquelle le second élément de filtration (2) comprend le second matériau adsorbant (3') en une quantité comprise dans la plage de 15 % en poids à 100 % en poids, en particulier dans la plage de 25 % en poids à 95 % en poids, de préférence dans la plage de 30 % en poids à 80 % en poids, plus préférablement dans la plage de 35 % en poids à 75 % en poids, encore plus préférablement dans la plage de 40 % en poids à 70 % en poids, en se basant sur le second élément de filtration (2), le second matériau adsorbant (3') du second élément de filtration (2) étant fixé dans et/ou sur au moins une structure porteuse (5).

9. Unité de filtration par adsorption selon la revendication 8,
dans laquelle la structure porteuse (4) et/ou la structure porteuse (5), indépendamment l'une de l'autre, sont perméables aux gaz, en particulier perméables à l'air, et en particulier présentent une perméabilité aux gaz, en particulier une perméabilité à l'air, d'au moins10 l·m⁻²·s⁻¹, en particulier d'au moins 30 l.m²·s⁻¹, de préférence d'au moins 50 l.m⁻²·s⁻¹, plus préférablement d'au moins 100 l.m²·s⁻¹, encore plus préférablement d'au moins 500 l.m²·s⁻¹, et/ou jusqu'à 10 000 l.m²·s⁻¹, en particulier jusqu'à 20 000 l.m⁻²·s⁻¹, à une résistance d'écoulement de 127 Pa.

10. Unité de filtration par adsorption selon l'une quelconque des revendications précédentes,
dans laquelle le premier élément de filtration (1) a une hauteur (h1), basée sur la taille parallèle au sens d'écoulement (R), comprise dans la plage de 1 mm à 100 mm, en particulier dans la plage de 2 mm à 75 mm, de préférence dans la plage de 3 mm à 50 mm, plus préférablement dans la plage de 4 mm à 40 mm, encore plus préférablement dans la plage de 5 mm à 30 mm, et/ou dans laquelle le premier élément de filtration (1) a un poids par unité de surface compris dans la plage de 10 g/m² à 1 500 g/m², en particulier dans la plage de 20 g/m² à 500 g/m², de préférence dans la plage de 30 g/m² à 400 g/m², plus préférablement dans la plage de 40 g/m² à 300 g/m², et/ou
dans laquelle le second élément de filtration (2) a une hauteur (h2), basée sur la taille parallèle au sens d'écoulement (R) dans l'état d'utilisation de l'unité de filtration par adsorption, comprise dans la plage de 0,05 mm à 50 mm, en particulier dans la plage de 0,1 mm à 30 mm, de préférence dans la plage de 0,15 mm à 10 mm, plus préférablement dans la plage de 0,2 mm à 5 mm, encore plus préférablement dans la plage de 0,4 mm à 4 mm, de manière encore plus préférée dans la plage de 0,5 mm à 3 mm, et/ou dans laquelle le second élément de filtration (2) a un poids par unité de surface compris dans la plage de 5 g/m² à 1 000 g/m², en particulier dans la plage de 5 g/m² à 400 g/m², de préférence dans la plage de 10 g/m² à 300 g/m², encore plus préférablement dans la plage de 15 g/m² à 200 g/m², et/ou
dans laquelle le rapport de la hauteur (h1) du premier élément de filtration (1) à la hauteur (h2) du second élément de filtration (2) [rapport h1 : h2], chacune étant basée sur la taille parallèle au sens d'écoulement (R), étant compris dans la plage de 3 : 1 à 15 : 1, de préférence dans la plage de 3 : 1 à 12 : 1, plus préférablement dans la plage de 3 : 1 à 10 : 1.

11. Procédé de purification de gaz et/ou de mélanges gazeux, de préférence de l'air, et/ou d'élimination de substances chimiques et/ou biologiques ou de substances nocives de gaz et/ou de mélanges gazeux, de préférence de l'air, le procédé comprenant une étape de procédé de mise en contact d'un gaz et/ou d'un mélange gazeux à purifier et/ou à nettoyer de substances chimiques et/ou biologiques ou de substances nocives avec une unité de filtration par adsorption telle que définie dans l'une quelconque des revendications précédentes.

12. Utilisation d'une unité de filtration par adsorption telle que définie dans l'une quelconque des revendications 1 à 10 pour produire des filtres et des matériaux de filtration de tous types, en particulier pour l'élimination de polluants, de substances odorantes et de poisons de tous types, en particulier de courants d'air et/ou de gaz, par exemple les filtres pour masques protecteurs NBC, les filtres anti-odeur, les filtres en feuille, les filtres à air, en particulier les filtres pour la purification de l'air dans une pièce, les structures de support par adsorption et les filtres pour le secteur médical.

13. Filtre ou matériau de filtration, en particulier pour l'élimination de polluants, de substances odorantes et de poisons de tous types, en particulier de courants d'air et/ou de gaz, sous la forme de filtres pour masques protecteurs NBC, filtres anti-odeur, filtres en feuille, filtres à air, en particulier filtres pour la purification de l'air dans une pièce, structures de support par adsorption et filtres pour le secteur médical, comprenant une unité de filtration par adsorption selon l'une quelconque des revendications 1 à 10.
